# EUROPEAN PATENT APPLICATION

(11) **EP 4 122 973 A1**
(43) Date of publication of application: **25.01.2023**
(21) Application number: 21772603.3
(22) Date of filing: 08.03.2021
(51) Int. Cl.: C08G 77/04, C08G 77/44, C08K 5/5415, C08L 83/06

(54) **MIXED COMPOSITION**

(30) Priority: 19.03.2020 JP 2020049995
(71) Applicant: Sumitomo Chemical Company, Limited, Tokyo 103-6020 (JP)
(72) Inventor: SHIMAZAKI, Yasuharu, Osaka-shi, Osaka 554-8558 (JP); UEHARA, Michiru, Osaka-shi, Osaka 554-8558 (JP); MIYAMOTO, Tomonori, Osaka-shi, Osaka 554-8558 (JP)
(74) Representative: Vossius & Partner Patentanwälte Rechtsanwälte mbB
(86) International application number: PCT/JP2021/008875
(87) International publication number: WO 2021/187184

(57) **Abstract**

A mixed composition of a compound (A1) represented by formula (a1), an organosilicon compound (B) represented by formula (b1), and an organosilicon compound (C) represented by formula (c1), wherein the mass ratio [A1/(B+C)] of the compound (A1) to the total amount of the organosilicon compound (B) and the organosilicon compound (C) is 0.060 or more.

## Description

### Technical Field

The present invention relates to a mixed composition capable of forming a film having a liquid-repellent property on various base materials, a film obtained by curing the mixed composition, and glass having the film.

### Background Art

Various vehicles, houses, building equipment and the like may have a problem such as deterioration of visibility and a poor appearance due to contamination of a surface of a windowpane. Thus, a surface of a base material such as glass is required to have a good liquid-repellent property. In particular, not only prevention of deposition of liquid droplets on a surface of a base material but also easy removal of deposited liquid droplets is required. As a film capable of improving a liquid-repellent property when formed on a surface of a base material, Patent Literature 1 discloses a transparent film comprising a polysiloxane backbone, and a trialkylsilyl group-containing molecular chain bonded to some of silicon atoms forming the polysiloxane backbone.

### Citation List

### Patent Literature

Patent Literature 1: International Publication No. WO 2016/068138

### Summary of Invention

### Technical Problem

An object of the present invention is to provide a mixed composition capable of forming a film excellent in liquid-repellent property (water-repellent property in particular). Another object of the present invention is to provide a film obtained by curing the mixed composition, and glass having the film.

### Solution to Problem

The present invention is as follows.
[1] A mixed composition of a compound (A1) represented by formula (a1), an organosilicon compound (B) represented by formula (b1) and an organosilicon compound (C) represented by formula (c1), wherein the mass ratio [A1/(B+C)] of the compound (A1) to the total amount of the organosilicon compound (B) and the organosilicon compound (C) is 0.060 or more: 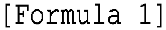 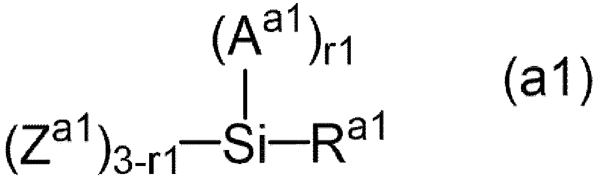
   wherein A^{a1} represents a hydroxy group or a hydrolyzable group, a plurality of A^{a1}s, when present, are optionally different from each other, Z^{a1} represents a hydrocarbon group, a trialkylsilyl group-containing molecular chain or a siloxane backbone-containing group, a plurality of Z^{a1}s, when present, are optionally different from each other, and r1 represents an integer of 1 to 3; and
   R^{a1} represents a group represented by formula (a11): 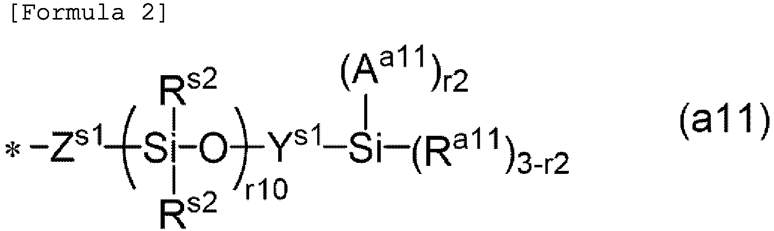
   wherein R^{s2}s each independently represent an alkyl group having 1 to 4 carbon atoms;
   R^{a11} represents a hydrocarbon group or a trialkylsilyloxy group, hydrogen atoms in the hydrocarbon group or the trialkylsilyloxy group are optionally replaced by fluorine atoms, and a plurality of R^{a11}s, when present, are optionally different from each other;
   A^{a11} represents a hydroxy group or a hydrolyzable group, and a plurality of A^{a11}s, when present, are optionally different from each other;
   Z^{s1} represents -O- or a divalent hydrocarbon group, and -CH₂- in the divalent hydrocarbon group is optionally replaced by -O-;
   Y^{s1} represents a singly bond or -Si(R^{s2})₂-L^{s1}-, L^{s1} represents a divalent hydrocarbon group, and -CH₂- in the divalent hydrocarbon group is optionally replaced by -O-;
   r2 represents an integer of 0 to 3;
   r10 represents an integer of 1 or more; and
   * represents a bond,

      Si(R^{b1})_{b20}(X^{b1})_{4-b20} (b1)
   wherein R^{b1} represents a hydrocarbon group having 1 to 5 carbon atoms, X^{b1} represents a hydrolyzable group, and b20 is 0 or 1, and

      R^{c1}-Si(X^{c1})₃ (c1)
   wherein R^{c1} represents a hydrocarbon group having 6 to 30 carbon atoms, and X^{c1} represents a hydrolyzable group.
[2] The mixed composition according to [1], wherein the mass ratio [A1/(B+C)] of the compound (A1) to the total amount of the organosilicon compound (B) and the organosilicon compound (C) is 0.2 or more and 15 or less.
[3] The mixed composition according to [1] or [2], wherein the mass ratio (A1/C) of the compound (A1) to the organosilicon compound (C) is 0.2 or more and 30 or less.
[4] The mixed composition according to any one of [1] to [3], wherein water (D) is mixed, and when the total amount of the mixed composition is 100 mass%, the amount of the water (D) is less than 20 mass%.
[5] The mixed composition according to any one of [1] to [4], wherein a solvent (E) is mixed.
[6] The mixed composition according to any one of [1] to [5], wherein a weak acid (G) having a pKa of 1 or more and 5 or less is mixed.
[7] A film obtained by curing the mixed composition according to any one of [1] to [6].
[8] A film, wherein when a spraying test for measuring the number of times of spraying, A, of water until slip drop of the water droplet is conducted three times in succession, the average of the numbers of times of spraying, A, is less than 4.0.
[9] The film according to [8], wherein the contact angle of water with respect to a surface of the film is 100° or more, and the slip drop angle of water with respect to the surface of the film is 20° or less.
[10] Glass having the film according to any one of [7] to [9] on at least one surface thereof.

Where a range of the amount, the molar ratio or the mass ratio of each component is described herein, the range can be adjusted during preparation of the mixed composition.

### Advantageous Effect of Invention

By using the mixed composition of the present invention, a film excellent in liquid-repellent property (water-repellent property in particular) can be provided.

### Description of Embodiment

The mixed composition of the present invention is a mixed composition of a compound (A1) represented by formula (a1), an organosilicon compound (B) represented by formula (b1) and an organosilicon compound (C) represented by formula (c1), and the mass ratio [A1/(B+C)] of the compound (A1) to the total amount of the organosilicon compound (B) and the organosilicon compound (C) is 0.060 or more. By using the mixed composition, a film excellent in liquid-repellent property (water-repellent property in particular) can be formed. By using the mixed composition, the slip drop property of the liquid droplet with respect to the film is significantly enhanced, so that even a very small liquid droplet can be easily removed, and the liquid droplet removing property (water droplet removing property in particular) of the film is also improved. By mixing the organosilicon compound (C), reaction is accelerated, so that the film formation time can be reduced.

It is important that the mass ratio [A1/(B+C)] of the compound (A1) to the total amount of the organosilicon compound (B) and the organosilicon compound (C) is 0.060 or more. When the mass ratio [A1/(B+C)] is 0.060 or more, the liquid-repellent property (water-repellent property in particular) can be further improved. Further, the liquid droplet removing property (water droplet removing property in particular) of the film can be improved. The mass ratio [A1/(B+C)] is more preferably 0.065 or more, still more preferably 0.07 or more, furthermore preferably 0.1 or more, particularly preferably 0.2 or more, most preferably 0.4 or more. The upper limit of the mass ratio [A1/(B+C)] is, for example, 100 or less, more preferably 50 or less, still more preferably 30 or less, particularly preferably 15 or less.

Hereinafter, the components will be described.

### [Compound (A1)]

In the mixed composition of the present invention, the compound (A1) represented by the following formula (a1) is mixed.

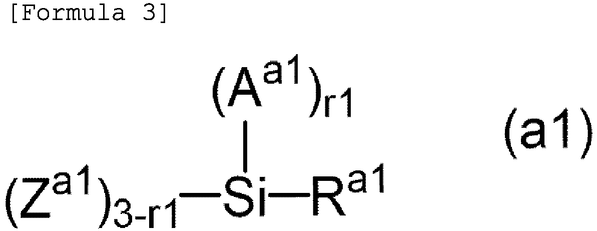

In formula (a1), A^{a1} represents a hydroxy group or a hydrolyzable group, a plurality of A^{a1}s, when present, are optionally different from each other, Z^{a1} represents a hydrocarbon group, a trialkylsilyl group-containing molecular chain or a siloxane backbone-containing group, a plurality of Z^{a1}s, when present, are optionally different from each other, r1 represents an integer of 1 to 3, and R^{a1} represents a group represented by formula (a11).

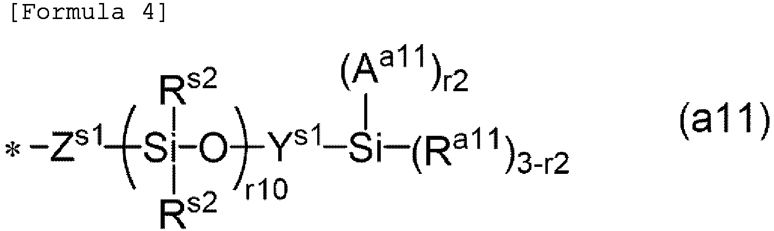

In formula (a11), R^{s2}s each independently represent an alkyl group having 1 to 4 carbon atoms, R^{a11} represents a hydrocarbon group or a trialkylsilyloxy group, hydrogen atoms in the hydrocarbon group or the trialkylsilyloxy group are optionally replaced by fluorine atoms, a plurality of R^{a11}s, when present, are optionally different from each other, A^{a11} represents a hydroxy group or a hydrolyzable group, a plurality of A^{a11}s, when present, are optionally different from each other, Z^{s1} represents -O- or a divalent hydrocarbon group, -CH₂- in the divalent hydrocarbon group is optionally replaced by -O-, Y^{s1} represents a single bond or -Si(R^{s2})₂-L^{s1}-, L^{s1} represents a divalent hydrocarbon group, -CH₂- in the divalent hydrocarbon group is optionally replaced by -O-, r2 represents an integer of 0 to 3, r10 represents an integer of 1 or more, and * represents a bond.

By mixing the compound (A1) with the mixed composition, the liquid-repellent property (water-repellent property in particular) is improved. The liquid droplet removing property (water droplet removing property in particular) is also improved.

First, the moiety represented by the following formula (s2) (hereinafter, sometimes referred to as a molecular chain (s2)) in the group represented by the above formula (a11) will be described.

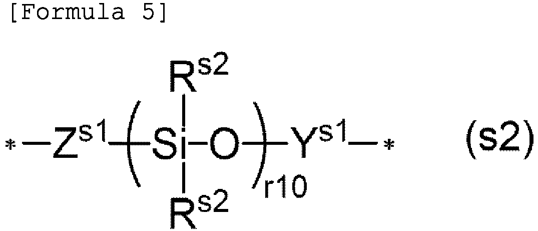

In the molecular chain (s2), the number of carbon atoms in the alkyl group represented by R^{s2} is preferably 1 to 4, more preferably 1 to 3, still more preferably 1 to 2. Examples of the alkyl group represented by R^{s2} is preferably a methyl group, an ethyl group, a propyl group and a butyl group, and a methyl group or an ethyl group is preferable, with a methyl group being particularly preferable.

In the molecular chain (s2), r10 is preferably an integer of 1 to 100, more preferably an integer of 1 to 80, still more preferably an integer of 1 to 60, particularly preferably an integer of 1 to 50, most preferably an integer of 1 to 30.

In the molecular chain (s2), the number of carbon atoms in the divalent hydrocarbon group represented by Z^{s1} or L^{s1} is preferably 1 to 10, more preferably 1 to 6, still more preferably 1 to 4. The divalent hydrocarbon group is preferably chainlike, and may be linear or branched when the divalent hydrocarbon group is chainlike. The divalent hydrocarbon group is preferably a divalent aliphatic hydrocarbon group, which is preferably an alkanediyl group. Examples of the divalent hydrocarbon group include a methylene group, an ethylene group, a propylene group and a butylene group.

Further, some of -CH₂-s in the divalent hydrocarbon group are optionally replaced by -O-. In this case, both two consecutive -CH₂-s are not replaced by -O-, and -CH₂-adjacent to the Si atom is not replaced by -O-. When two or more -CH₂-s are replaced by -O-, the number of carbon atoms between -O- and -O- is preferably 2 to 4, more preferably 2 or 3. As the group in which a part of the divalent hydrocarbon group is replaced by -O-, specifically, groups having a (poly)ethylene glycol unit, groups having a (poly)propylene glycol unit, and the like can be exemplified.

In the molecular chain (s2), Z^{s1} is preferably -O- or a divalent aliphatic hydrocarbon group, more preferably - O-.

In the molecular chain (s2), Y^{s1} is preferably a single bond.

Preferably, Z^{s1} is -O- and Y^{s1} is a single bond in the molecular chain (s2), i.e. the molecular chain (s2) consists only of repeated dialkylsilyloxy groups.

Examples of the molecular chain (s2) include molecular chains represented by the following formulae. In the formula, r21 represents an integer of 1 or more, * represents a bond to a silicon atom. r21 is in the same numerical range as that for r10 above, and the same applies to the preferred range.

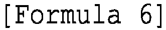

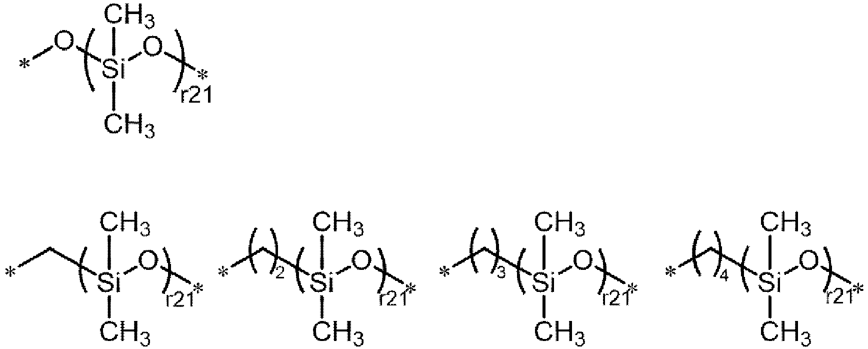

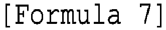

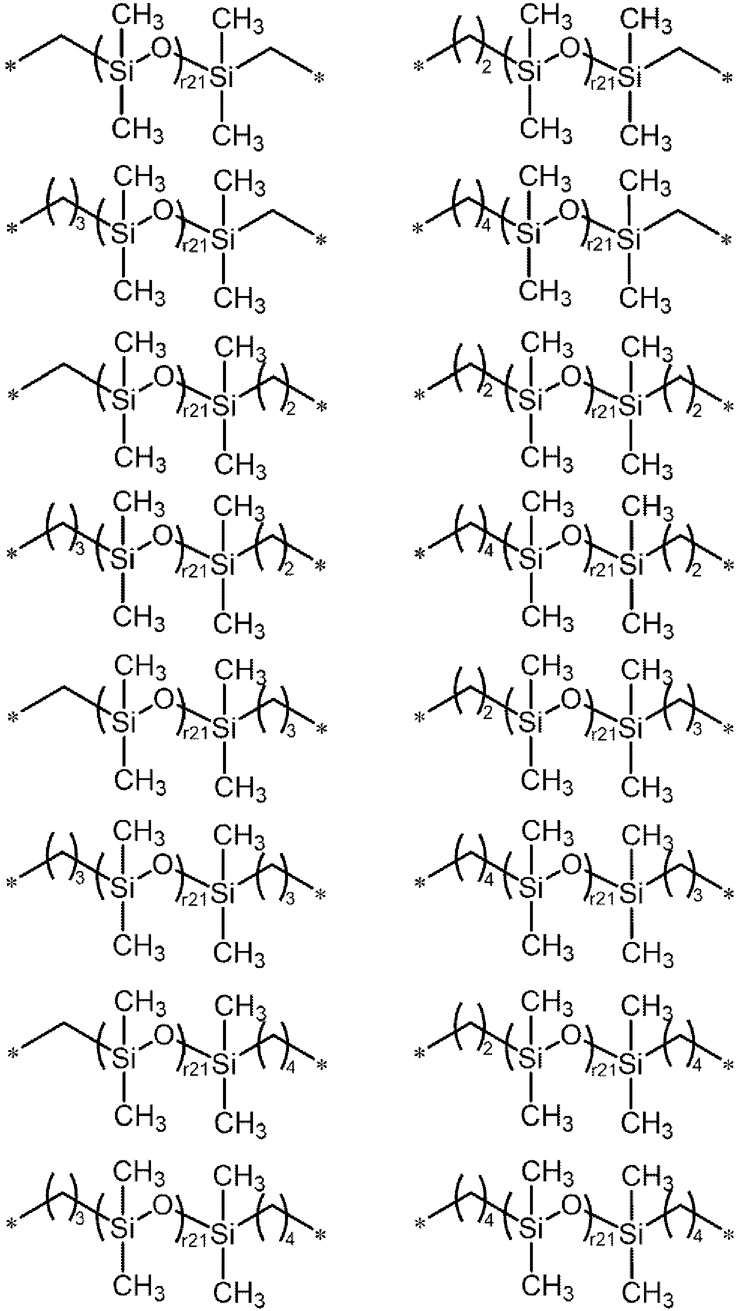

Next, moieties other than the molecular chain (s2) in the group represented by the above formula (a11) will be described.

In formula (a11), R^{a11} represents a hydrocarbon group or a trialkylsilyloxy group, and hydrogen atoms in the hydrocarbon group or the trialkylsilyloxy group are optionally replaced by fluorine atoms. The number of the replacing fluorine atoms is preferably 1 or more, more preferably 3 or more, and preferably equal to or less than 2 × A + 1 where A is the number of carbon atoms.

When R^{a11} is a hydrocarbon group, the number of carbon atoms in the group is preferably 1 to 4, more preferably 1 to 3, still more preferably 1 or 2. When R^{a11} is a hydrocarbon group, an aliphatic hydrocarbon group is preferable, and an alkyl group is more preferable. Examples of the alkyl group include a methyl group, an ethyl group, a propyl group and a butyl group.

When R^{a11} is a trialkylsilyloxy group, the number of carbon atoms in the alkyl group forming the trialkylsilyloxy group is preferably 1 to 4, more preferably 1 to 3, still more preferably 1 or 2. Examples of the alkyl group include a methyl group, an ethyl group, a propyl group and a butyl group. The three alkyl groups forming the trialkylsilyloxy group may be the same or different, and are preferably the same. The trialkylsilyloxy group means a group in which an oxygen atom is bonded to a silicon atom of a trialkylsilyl group.

In formula (a11), A^{a11} represents a hydroxy group or a hydrolyzable group. The hydrolyzable group may be a group which gives a hydroxy group (silanol group) when hydrolyzed, and preferred examples thereof include alkoxy groups having 1 to 4 carbon atoms, such as a methoxy group, an ethoxy group, a propoxy group and a butoxy group; an acetoxy group; a chlorine atom; and an isocyanate group. A^{a11} is more preferably an alkoxy group having 1 to 4 carbon atoms, still more preferably an alkoxy group having 1 or 2 carbon atoms.

R^{a1} represented by the above formula (a11) is preferably a group represented by the following formula (a11-1) or formula (a-11-2).

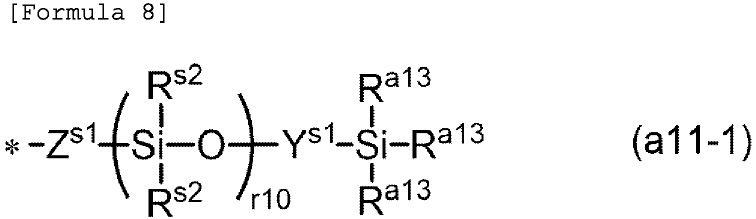

In formula (a11-1), Z^{s1}, R^{s2}, Y^{s1} and r10 have the same meanings as described above, R^{a13}s each independently represent a hydrocarbon group or a trialkylsilyloxy group, hydrogen atoms in the hydrocarbon group or the trialkylsilyloxy group are optionally replaced by fluorine atoms, and * represents a bond to a silicon atom.

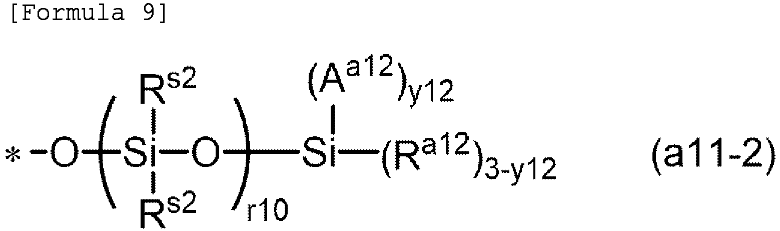

In formula (a11-2), R^{s2} and r10 have the same meanings as described above, A^{a12} represents a hydroxy group or a hydrolyzable group, a plurality of A^{a12}s, when present, are optionally different from each other, R^{a12} represents a hydrocarbon group, a plurality of R^{a12}s, when present, are optionally different from each other, and y12 represents an integer of 1 to 3. * represents a bond to a silicon atom.

First, the group represented by formula (a11-1) will be described.

Examples of the hydrocarbon group represented by R^{a13} in formula (a11-1) include those similar to the hydrocarbon groups described for R^{a11} above, and the hydrocarbon group is preferably an alkyl group having 1 to 4 carbon atoms, more preferably an alkyl group having 1 to 3 carbon atoms, still more preferably an alkyl group having 1 or 2 carbon atoms. In particular, when all R^{a13}s are hydrocarbon groups, R^{a13} is preferably an alkyl group. The three R^{a13}s may be the same or different, and are preferably the same. When all R^{a13}s are hydrocarbon groups, the total number of carbon atoms of the three R^{a13}s is preferably 9 or less, more preferably 6 or less, still more preferably 4 or less. Preferably at least one, more preferably at least two, particularly preferably all of the three R^{a13}s are methyl groups.

Examples of the trialkylsilyloxy group represented by R^{a13} in formula (a11-1) include those similar to the trialkylsilyloxy groups described for R^{a11} above, and the same applies to the preferred range. In formula (a11-1), at least one of the R^{a13}s may be a trialkylsilyloxy group, and it is also preferable that all of the R^{a13}s be trialkylsilyloxy groups.

The group represented by formula (a11-1) is more preferably a group of the following formula (s3-1), still more preferably a group of the following formula (s3-1-1). It is also more preferable that the group represented by formula (a11-1) be a group represented by the following formula (s3-2), still more preferably a group represented by the following formula (s3-2-1).

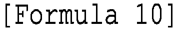

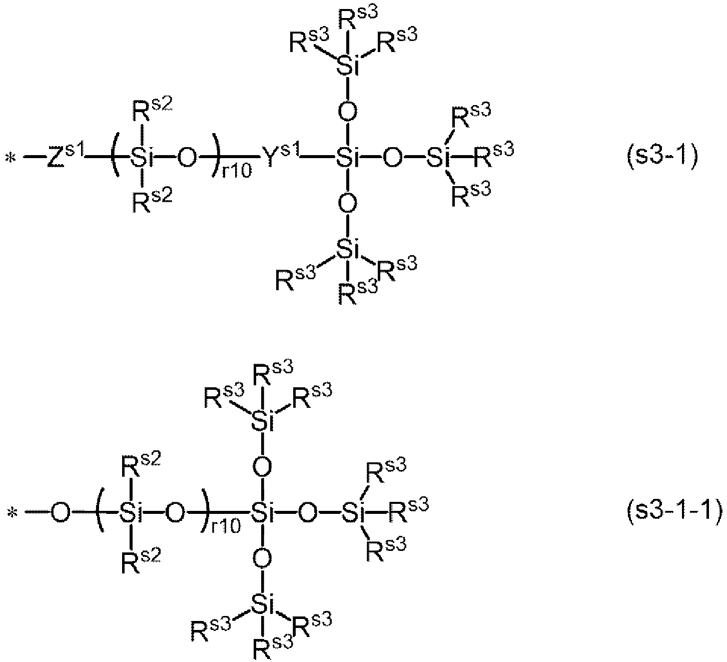

In formulae (s3-1) and (s3-1-1), Z^{s1}, R^{s2}, Y^{s1} and r10 have the same meanings as described above. R^{s3} represents an alkyl group having 1 to 4 carbon atoms. * represents a bond to a silicon atom.

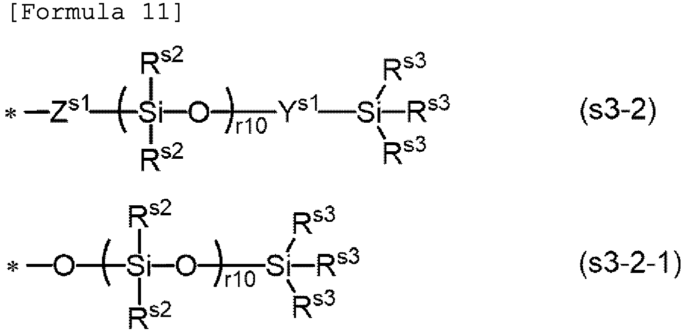

In formulae (s3-2) and (s3-2-1), Z^{s1}, R^{s2}, Y^{s1} , R^{s3} and r10 have the same meanings as described above. * represents a bond to a silicon atom.

The number of carbon atoms in the alkyl group represented by R^{s3} is preferably 1 to 3, more preferably 1 or 2. In formulae (s3-1), (s3-1-1), (s3-2) and (s3-2-1), the total number of carbon atoms in R^{s3}s in -Si(R^{s3})₃ is preferably 9 or less, more preferably 6 or less, still more preferably 4 or less. Further, preferably at least one, more preferably at least two, particularly preferably all of the three R^{s3}s in -Si (R^{s3})₃ are methyl groups.

Examples of the group represented by formula (a11-1) include groups represented by formula (s3-I). In formula (s3-I), combinations of Z^{s10}, R^{s20}, n10, Y^{s10} and R^{s10} are preferably those shown in the tables below.

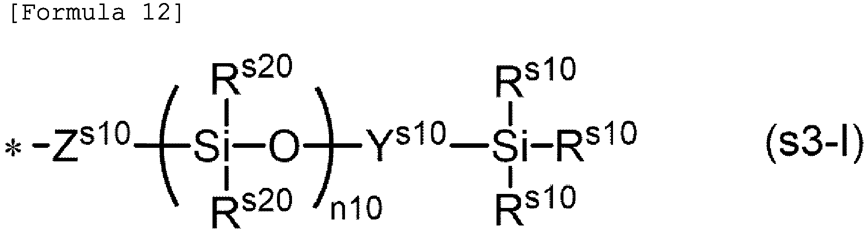

**[Table 1]**

| | Z^{s10} | R^{s20} | n10 | Y^{s10} | R^{s10} |
|---|---|---|---|---|---|
| (s3-I-1) | ^{∗}-O-^{∗} | CH₃-^{∗} | 1∼60 | - | (CH₃)₃SiO-^{∗} |
| (s3-I-2) | ^{∗}-O-^{∗} | CH₃-^{∗} | 1∼60 | ^{∗}-Si(CH₃)₂-CH₂-^{∗} | (CH₃)₃SiO-^{∗} |
| (s3-I-3) | ^{∗}-O-^{∗} | CH₃-^{∗} | 1∼60 | ^{∗}-Si(CH₃)₂-(CH₂)₂-^{∗} | (CH₃)₃SiO-^{∗} |
| (s3-I-4) | ^{∗}-O-^{∗} | CH₃-^{∗} | 1∼60 | ^{∗}-Si(CH₃)₂-(CH₂)₃-^{∗} | (CH₃)₃SiO-^{∗} |
| (s3-I-5) | ^{∗}-O-^{∗} | CH₃-^{∗} | 1∼60 | ^{∗}-Si(CH₃)₂-(CH₂)₄-^{∗} | (CH₃)₃SiO-^{∗} |
| (s3-I-6) | ^{∗}-CH₂-^{∗} | CH₃-^{∗} | 1∼60 | - | (CH₃)₃SiO-^{∗} |
| (s3-I-7) | ^{∗}-CH₂-^{∗} | CH₃-^{∗} | 1∼60 | ^{∗}-Si(CH₃)₂-CH₂-^{∗} | (CH₃)₃SiO-^{∗} |
| (s3-I-8) | ^{∗}-CH₂-^{∗} | CH₃-^{∗} | 1∼60 | ^{∗}-Si(CH₃)₂-(CH₂)₂-^{∗} | (CH₃)₃SiO-^{∗} |
| (s3-I-9) | ^{∗}-CH₂-^{∗} | CH₃-^{∗} | 1∼60 | ^{∗}-Si(CH₃)₂-(CH₂)₃-^{∗} | (CH₃)₃SiO-^{∗} |
| (s3-I-10) | ^{∗}-CH₂-^{∗} | CH₃-^{∗} | 1∼60 | ^{∗}-Si(CH₃)₂-(CH₂)₄-^{∗} | (CH₃)₃SiO-^{∗} |
| (s3-I-11) | ^{∗}-(CH₂)₂-^{∗} | CH₃-^{∗} | 1∼60 | - | (CH₃)₃SiO-^{∗} |
| (s3-I-12) | ^{∗}-(CH₂)₂-^{∗} | CH₃-^{∗} | 1∼60 | ^{∗}-Si(CH₃)₂-CH₂-^{∗} | (CH₃)₃SiO-^{∗} |
| (s3-I-13) | ^{∗}-(CH₂)₂-^{∗} | CH₃-^{∗} | 1∼60 | ^{∗}-Si(CH₃)₂-(CH₂)₂-^{∗} | (CH₃)₃SiO-^{∗} |
| (s3-I-14) | ^{∗}-(CH₂)₂-^{∗} | CH₃-^{∗} | 1∼60 | ^{∗}-Si(CH₃)₂-(CH₂)₃-^{∗} | (CH₃)₃SiO-^{∗} |
| (s3-I-15) | ^{∗}-(CH₂)₂-^{∗} | CH₃-^{∗} | 1∼60 | ^{∗}-Si(CH₃)₂-(CH₂)₄-^{∗} | (CH₃)₃SiO-^{∗} |
| (s3-I-16) | ^{∗}-(CH₂)₃-^{∗} | CH₃-^{∗} | 1∼60 | - | (CH₃)₃SiO-^{∗} |
| (s3-I-17) | ^{∗}-(CH₂)₃-^{∗} | CH₃-^{∗} | 1∼60 | ^{∗}-Si(CH₃)₂-CH₂-^{∗} | (CH₃)₃SiO-^{∗} |
| (s3-I-18) | ^{∗}-(CH₂)₃-^{∗} | CH₃-^{∗} | 1∼60 | ^{∗}-Si(CH₃)₂-(CH₂)₂-^{∗} | (CH₃)₃SiO-^{∗} |
| (s3-I-19) | ^{∗}-(CH₂)₃-^{∗} | CH₃-^{∗} | 1∼60 | ^{∗}-Si(CH₃)₂-(CH₂)₃-^{∗} | (CH₃)₃SiO-^{∗} |
| (s3-I-20) | ^{∗}-(CH₂)₃-^{∗} | CH₃-^{∗} | 1∼60 | ^{∗}-Si(CH₃)₂-(CH₂)₄-^{∗} | (CH₃)₃SiO-^{∗} |
| (s3-I-21) | ^{∗}-(CH₂)₄-^{∗} | CH₃-^{∗} | 1∼60 | - | (CH₃)₃SiO-^{∗} |
| (s3-I-22) | ^{∗}-(CH₂)₄-^{∗} | CH₃-^{∗} | 1∼60 | ^{∗}-Si(CH₃)₂-CH₂-^{∗} | (CH₃)₃SiO-^{∗} |
| (s3-I-23) | ^{∗}-(CH₂)₄-^{∗} | CH₃-^{∗} | 1∼60 | ^{∗}-Si(CH₃)₂-(CH₂)₂-^{∗} | (CH₃)₃SiO-^{∗} |
| (s3-I-24) | ^{∗}-(CH₂)₄-^{∗} | CH₃-^{∗} | 1∼60 | ^{∗}-Si(CH₃)₂-(CH₂)₃-^{∗} | (CH₃)₃SiO-^{∗} |
| (s3-I-25) | ^{∗}-(CH₂)₄-^{∗} | CH₃-^{∗} | 1∼60 | ^{∗}-Si(CH₃)₂-(CH₂)₄-^{∗} | (CH₃)₃SiO-^{∗} |

**[Table 2]**

| | Z^{s10} | R^{s20} | n10 | Y^{s10} | R^{s10} |
|---|---|---|---|---|---|
| (s3-I-26) | ^{∗}-O-^{∗} | CH₃-^{∗} | 1∼60 | - | CH₃-^{∗} |
| (s3-I-27) | ^{∗}-O-^{∗} | CH₃-^{∗} | 1∼60 | ^{∗}-Si(CH₃)₂-CH₂-^{∗} | CH₃-^{∗} |
| (s3-I-28) | ^{∗}-O-^{∗} | CH₃-^{∗} | 1∼60 | ^{∗}-Si(CH₃)₂-(CH₂)₂-^{∗} | CH₃-^{∗} |
| (s3-I-29) | ^{∗}-O-^{∗} | CH₃-^{∗} | 1∼60 | ^{∗}-Si(CH₃)₂-(CH₂)₃-^{∗} | CH₃-^{∗} |
| (s3-I-30) | ^{∗}-O-^{∗} | CH₃-^{∗} | 1∼60 | ^{∗}-Si(CH₃)₂-(CH₂)₄-^{∗} | CH₃-^{∗} |
| (s3-I-31) | ^{∗}-CH₂-^{∗} | CH₃-^{∗} | 1∼60 | - | CH₃-^{∗} |
| (s3-I-32) | ^{∗}-CH₂-^{∗} | CH₃-^{∗} | 1∼60 | ^{∗}-Si(CH₃)₂-CH₂-^{∗} | CH₃-^{∗} |
| (s3-I-33) | ^{∗}-CH₂-^{∗} | CH₃-^{∗} | 1∼60 | ^{∗}-Si(CH₃)₂-(CH₂)₂-^{∗} | CH₃-^{∗} |
| (s3-I-34) | ^{∗}-CH₂-^{∗} | CH₃-^{∗} | 1∼60 | ^{∗}-Si(CH₃)₂-(CH₂)₃-^{∗} | CH₃-^{∗} |
| (s3-I-35) | ^{∗}-CH₂-^{∗} | CH₃-^{∗} | 1∼60 | ^{∗}-Si(CH₃)₂-(CH₂)₄-^{∗} | CH₃-^{∗} |
| (s3-I-36) | ^{∗}-(CH₂)₂-^{∗} | CH₃-^{∗} | 1∼60 | - | CH₃-^{∗} |
| (s3-I-37) | ^{∗}-(CH₂)₂-^{∗} | CH₃-^{∗} | 1∼60 | ^{∗}-Si(CH₃)₂-CH₂-^{∗} | CH₃-^{∗} |
| (s3-I-38) | ^{∗}-(CH₂)₂-^{∗} | CH₃-^{∗} | 1∼60 | ^{∗}-Si(CH₃)₂-(CH₂)₂-^{∗} | CH₃-^{∗} |
| (s3-I-39) | ^{∗}-(CH₂)₂-^{∗} | CH₃-^{∗} | 1∼60 | ^{∗}-Si(CH₃)₂-(CH₂)₃-^{∗} | CH₃-^{∗} |
| (s3-I-40) | ^{∗}-(CH₂)₂-^{∗} | CH₃-^{∗} | 1∼60 | ^{∗}-Si(CH₃)₂-(CH₂)₄-^{∗} | CH₃-^{∗} |
| (s3-I-41) | ^{∗}-(CH₂)₃-^{∗} | CH₃-^{∗} | 1∼60 | - | CH₃-^{∗} |
| (s3-I-42) | ^{∗}-(CH₂)₃-^{∗} | CH₃-^{∗} | 1∼60 | ^{∗}-Si(CH₃)₂-CH₂-^{∗} | CH₃-^{∗} |
| (s3-I-43) | ^{∗}-(CH₂)₃-^{∗} | CH₃-^{∗} | 1∼60 | ^{∗}-Si(CH₃)₂-(CH₂)₂-^{∗} | CH₃-^{∗} |
| (s3-I-44) | ^{∗}-(CH₂)₃-^{∗} | CH₃-^{∗} | 1∼60 | ^{∗}-Si(CH₃)₂-(CH₂)₃-^{∗} | CH₃-^{∗} |
| (s3-I-45) | ^{∗}-(CH₂)₃-^{∗} | CH₃-^{∗} | 1∼60 | ^{∗}-Si(CH₃)₂-(CH₂)₄-^{∗} | CH₃-^{∗} |
| (s3-I-46) | ^{∗}-(CH₂)₄-^{∗} | CH₃-^{∗} | 1∼60 | - | CH₃-^{∗} |
| (s3-I-47) | ^{∗}-(CH₂)₄-^{∗} | CH₃-^{∗} | 1∼60 | ^{∗}-Si(CH₃)₂-CH₂-^{∗} | CH₃-^{∗} |
| (s3-I-48) | ^{∗}-(CH₂)₄-^{∗} | CH₃-^{∗} | 1∼60 | ^{∗}-Si(CH₃)₂-(CH₂)₂-^{∗} | CH₃-^{∗} |
| (s3-I-49) | ^{∗}-(CH₂)₄-^{∗} | CH₃-^{∗} | 1∼60 | ^{∗}-Si(CH₃)₂-(CH₂)₃-^{∗} | CH₃-^{∗} |
| (s3-I-50) | ^{∗}-(CH₂)₄-^{∗} | CH₃-^{∗} | 1∼60 | ^{∗}-Si(CH₃)₂-(CH₂)₄-^{∗} | CH₃-^{∗} |

n10 shown in Tables 1 and 2 above is preferably an integer of 1 to 30.

Next, the group represented by formula (a11-2) will be described. In formula (a11-2), A^{a12} represents a hydroxy group or a hydrolyzable group, and the hydrolyzable group may be a group which gives a hydroxy group (silanol group) when hydrolyzed, and preferred examples thereof include alkoxy groups having 1 to 4 carbon atoms, such as a methoxy group, an ethoxy group, a propoxy group and a butoxy group; an acetoxy group; a chlorine atom; and an isocyanate group. A^{a12} is preferably an alkoxy group having 1 to 4 carbon atoms or a hydroxy group, more preferably an alkoxy group having 1 or 2 carbon atoms or a hydroxy group. A plurality of A^{a12}s, when present, may be the same or different, and are preferably the same.

Examples of the hydrocarbon group represented by R^{a12} in formula (a11-2) include those similar to the hydrocarbon groups described for R^{a11} above, and the hydrocarbon group is preferably an alkyl group having 1 to 4 carbon atoms, more preferably a methyl group or an ethyl group, still more preferably a methyl group. A plurality of R^{a12}s, when present, may be the same or different, and are preferably the same.
y12 is preferably 1 or 3.

Examples of the group represented by formula (a11-2) include groups represented by formula (s3-II). In formula (s3-II), combinations of A^{a0}, R^{s22}, n20, y0 and R^{a0} are preferably those shown in the tables below.

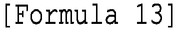

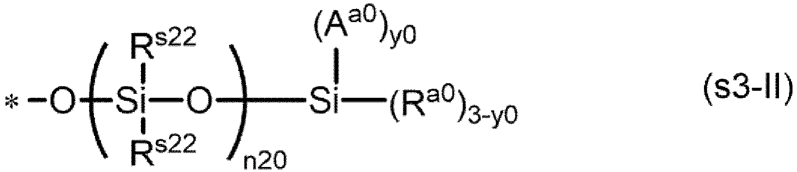

**[Table 3]**

| | A^{a0} | R^{s22} | n20 | y0 | R^{a0} |
|---|---|---|---|---|---|
| (s3-II-1) | C₂H₅O-^{∗} | CH₃-^{∗} | 1∼60 | 1 | CH₃-^{∗} |
| (s3-II-2) | CH₃O-^{∗} | CH₃-^{∗} | 1∼60 | 1 | CH₃-^{∗} |
| (s3-II-3) | HO-^{∗} | CH₃-^{∗} | 1∼60 | 1 | CH₃-^{∗} |
| (s3-II-4) | C₂H₅O-^{∗} | CH₃₋∗ | 1∼60 | 1 | C₂H₅-^{∗} |
| (s3-II-5) | CH₃O-^{∗} | CH₃₋∗ | 1∼60 | 1 | C₂H₅-^{∗} |
| (s3-II-6) | HO-^{∗} | CH₃₋∗ | 1∼60 | 1 | C₂H₅-^{∗} |
| (s3-II-7) | C₂H₅O-^{∗} | CH₃₋∗ | 1∼60 | 2 | CH₃-^{∗} |
| (s3-II-8) | CH₃O-^{∗} | CH₃₋∗ | 1∼60 | 2 | CH₃-^{∗} |
| (s3-II-9) | HO-^{∗} | CH₃₋∗ | 1∼60 | 2 | CH₃-^{∗} |
| (s3-II-10) | C₂H₅O-^{∗} | CH₃₋∗ | 1∼60 | 2 | C₂H₅-^{∗} |
| (s3-II-11) | CH₃O-^{∗} | CH₃₋∗ | 1∼60 | 2 | C₂H₅-^{∗} |
| (s3-II-12) | HO-^{∗} | CH₃₋∗ | 1∼60 | 2 | C₂H₅-^{∗} |
| (53-II-13) | C₂H₅O-^{∗} | CH₃₋∗ | 1∼60 | 3 | - |
| (s3-II-14) | CH₃O-^{∗} | CH₃₋∗ | 1∼60 | 3 | - |
| (s3-II-15) | HO-^{∗} | CH₃₋∗ | 1∼60 | 3 | - |

n20 shown in Table 3 above is preferably an integer of 1 to 30.

Next, formula (a1) will be described. A^{a1} in formula (a1) represents a hydroxy group or a hydrolyzable group, and the hydrolyzable group may be a group which gives a hydroxy group (silanol group) when hydrolyzed, and preferred examples thereof include alkoxy groups having 1 to 4 carbon atoms, such as a methoxy group, an ethoxy group, a propoxy group and a butoxy group; an acetoxy group; a chlorine atom; and an isocyanate group. A^{a1} is preferably an alkoxy group having 1 to 4 carbon atoms, more preferably an alkoxy group having 1 or 2 carbon atoms. A plurality of A^{a1}s, when present, may be the same or different, and are preferably the same.

Z^{a1} in formula (a1) represents a hydrocarbon group, a trialkylsilyl group-containing molecular chain or a siloxane backbone-containing group.

When Z^{a1} is a hydrocarbon group, the number of carbon atoms thereof is preferably 1 to 4, more preferably 1 to 3, still more preferably 1 or 2. When Z^{a1} is a hydrocarbon group, an aliphatic hydrocarbon group is preferable, and an alkyl group is more preferable. Examples of the alkyl group include a methyl group, an ethyl group, a propyl group and a butyl group, and a methyl group or an ethyl group is still more preferable, with a methyl group being particularly preferable.

The trialkylsilyl group-containing molecular chain means a monovalent group having a structure in which a trialkylsilyl-containing group is bonded to an end of the molecular chain. When Z^{a1} is a trialkylsilyl group-containing molecular chain, a group of the above formula (a11-1) is preferable where when all R^{a13}s are hydrocarbon groups, the R^{a13}s are alkyl groups.

When Z^{a1} is a siloxane backbone-containing group, the siloxane backbone-containing group is preferably a monovalent group containing a siloxane unit (Si-O-) and consisting of atoms whose number is smaller than the number of atoms forming R^{a1}. This makes the siloxane backbone-containing group smaller in length or three-dimensional extent (bulkiness) than R^{a1}. The siloxane backbone-containing group may contain a divalent hydrocarbon group.

The siloxane backbone-containing group is preferably a group of the following formula (s4).

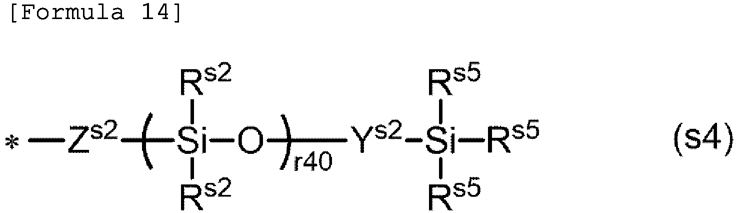

In formula (s4), R^{s2} has the same meaning as that described above, and R^{s2}s each independently represent an alkyl group having 1 to 4 carbon atoms.

R^{s5} represents a hydrocarbon group or a hydroxy group, -CH₂- in the hydrocarbon group is optionally replaced by -O-, and hydrogen atoms in the hydrocarbon group are optionally replaced by fluorine atoms.

Z^{s2} represents -O- or a divalent hydrocarbon group, and -CH₂- in the divalent hydrocarbon group is optionally replaced by -O-.

Y^{s2} represents a single bond or -Si (Rₛ₂)₂-L^{s2}-. L^{s2} represents a divalent hydrocarbon group, and -CH₂- in the divalent hydrocarbon group is optionally replaced by -O-.
r40 represents an integer of 0 to 5. * represents a bond to a silicon atom.

Examples of the hydrocarbon group represented by R^{s5} in formula (s4) include groups similar to the hydrocarbon groups described for R^{a11} above, and aliphatic hydrocarbon groups are preferable, with alkyl groups being more preferable. The number of carbon atoms is preferably 1 to 4, more preferably 1 to 3, still more preferably 1 or 2.

Examples of the divalent hydrocarbon group represented by Z^{s2} or L^{s2} include groups similar to the divalent hydrocarbon groups represented by Z^{s1}, and the number of carbon atoms is preferably 1 to 10, more preferably 1 to 6, still more preferably 1 to 4. The divalent hydrocarbon group represented by Z^{s2} or L^{s2} is preferably a divalent aliphatic hydrocarbon group, more preferably a linear or branched alkanediyl group.
r40 is preferably an integer of 1 to 5, more preferably an integer of 1 to 3.

The total number of atoms in the siloxane backbone-containing group is preferably 100 or less, more preferably 50 or less, still more preferably 30 or less, and preferably 10 or more. The difference between the number of atoms in R^{a1} and the number of atoms in the siloxane backbone-containing group is 10 or more, more preferably 20 or more, and preferably 1000 or less, more preferably 500 or less, still more preferably 200 or less.

Specific examples of the siloxane backbone-containing group include groups represented by the following formulae. 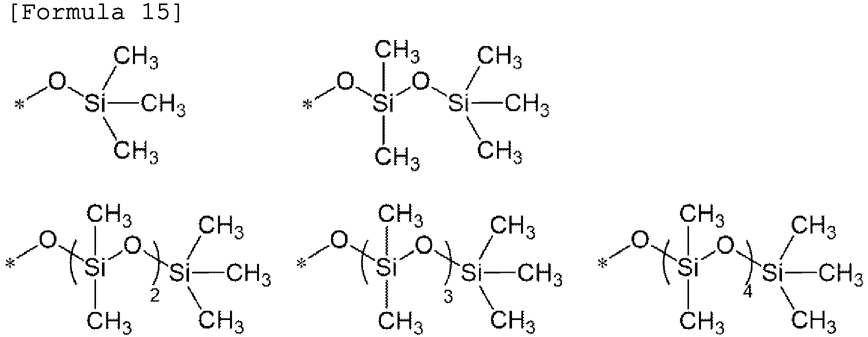 r1 in formula (a1) represents an integer of 1 to 3, preferably 2 or 3, more preferably 3.

Examples of the compound (A1) represented by formula (a1) include compounds represented by the following formula (a1-1) or the following formula (a1-2).

Examples of the compound (A1) represented by formula (a1) include compounds represented by the following formula (a1-1), i.e. compounds in which R^{a1} in formula (a1) is a group represented by formula (a11-1) and r1 in formula (a1) is 3.

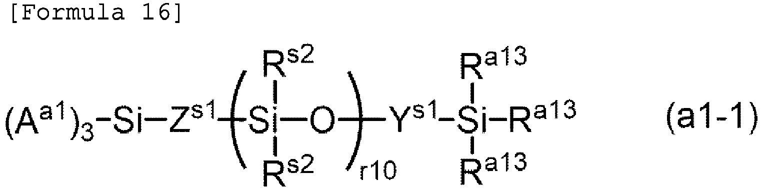

In formula (a1-1), A^{a1}, Z^{s1}, R^{s2}, Y^{s1}, R^{a13} and r10 have the same meanings as those described above.

Among compounds represented by formula (a1-1), compounds represented by the following formula (1-1) are preferable, and compounds represented by formula (1-1-1) are more preferable. The compound represented by formula (a1-1) may be a compound represented by the following formula (1-2), and is preferably a compound represented by formula (1-2-1).

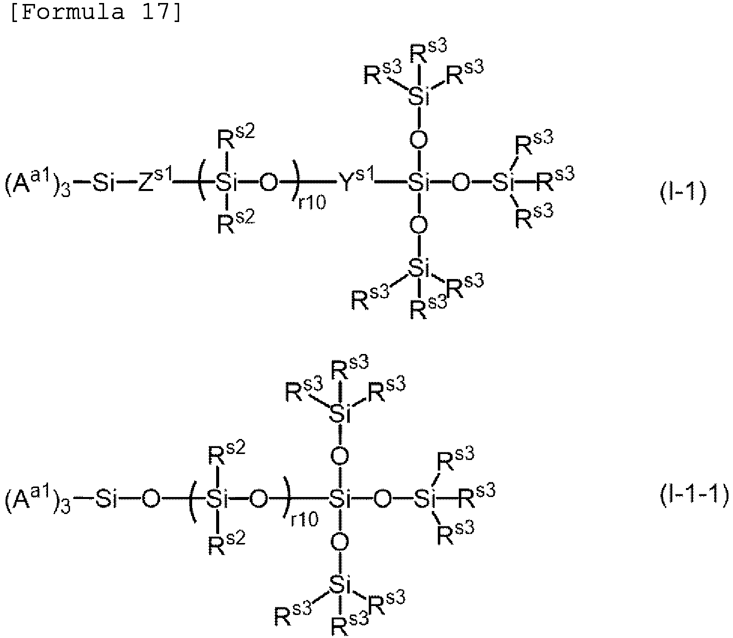

In formulae (1-1) and (I-1-1), A^{a1}, Z^{s1}, R^{s2}, Y^{s1}, R^{s3} and r10 have the same meanings as those described above.

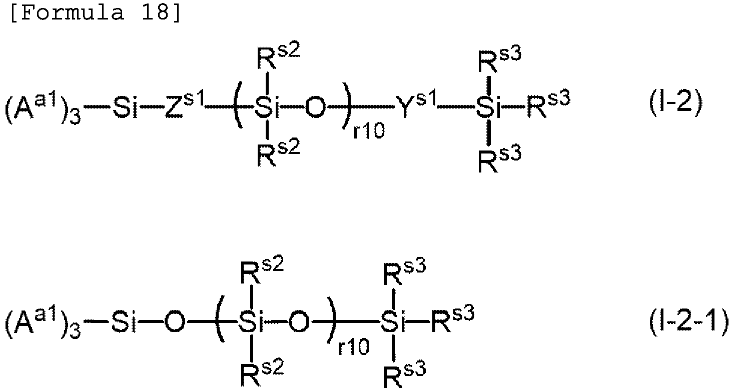

In formulae (1-2) and (1-2-1), A^{a1}, Z^{s1}, R^{s2}, Y^{s1}, R^{s3} and r10 have the same meanings as those described above.

Specific examples of the compound represented by formula (a1-1) include compounds represented by the following formula (I-I). In formula (I-I), combinations of A^{a20}, Z^{s10}, R^{s20}, n10, Y^{s10} and R^{s10} are preferably those shown in the tables below.

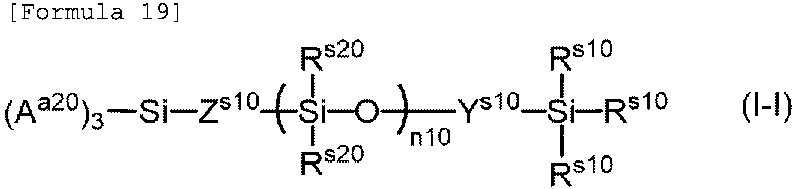

**[Table 4-1]**

| | A^{a20} | Z^{s10} | R^{s20} | n10 | Y^{s10} | R^{s10} |
|---|---|---|---|---|---|---|
| (I-I-1) | C₂H₅O-^{∗} | ^{∗}-O-^{∗} | CH₃-^{∗} | 1∼60 | - | (CH₃)₃SiO-^{∗} |
| (I-I-2) | C₂H₅O-^{∗} | ^{∗}-O-^{∗} | CH₃-^{∗} | 1∼60 | ^{∗}-Si(CH₃)₂-CH₂-^{∗} | (CH₃)₃SiO-^{∗} |
| (I-I-3) | C₂H₅O-^{∗} | ^{∗}-O-^{∗} | CH₃-^{∗} | 1∼60 | ^{∗}-Si(CH₃)₂-(CH₂)₂-^{∗} | (CH₃)₃SiO-^{∗} |
| (I-I-4) | C₂H₅O-^{∗} | ^{∗}-O-^{∗} | CH₃-^{∗} | 1∼60 | ^{∗}-Si(CH₃)₂-(CH₂)₃-^{∗} | (CH₃)₃SiO-^{∗} |
| (I-I-5) | C₂H₅O-^{∗} | ^{∗}-O-^{∗} | CH₃-^{∗} | 1∼60 | ^{∗}-Si(CH₃)₂-(CH₂)₄-^{∗} | (CH₃)₃SiO-^{∗} |
| (I-I-6) | C₂H₅O-^{∗} | ^{∗}-CH₂-^{∗} | CH₃-^{∗} | 1∼60 | - | (CH₃)₃SiO-^{∗} |
| (I-I-7) | C₂H₅O-^{∗} | ^{∗}-CH₂-^{∗} | CH₃-^{∗} | 1∼60 | ^{∗}-Si(CH₃)₂-CH₂-^{∗} | (CH₃)₃SiO-^{∗} |
| (I-I-8) | C₂H₅O-^{∗} | ^{∗}-CH₂-^{∗} | CH₃-^{∗} | 1∼60 | ^{∗}-Si(CH₃)₂-(CH₂)₂-^{∗} | (CH₃)₃SiO-^{∗} |
| (I-I-9) | C₂H₅O-^{∗} | ^{∗}-CH₂-^{∗} | CH₃-^{∗} | 1∼60 | ^{∗}-Si(CH₃)₂-(CH₂)₃-^{∗} | (CH₃)₃SiO-^{∗} |
| (I-I-10) | C₂H₅O-^{∗} | ^{∗}-CH₂-^{∗} | CH₃-^{∗} | 1∼60 | ^{∗}-Si(CH₃)₂-(CH₂)₄-^{∗} | (CH₃)₃SiO-^{∗} |
| (I-I-11) | C₂H₅O-^{∗} | ^{∗}-(CH₂)₂-^{∗} | CH₃-^{∗} | 1∼60 | - | (CH₃)₃SiO-^{∗} |
| (I-I-12) | C₂H₅O-^{∗} | ^{∗}-(CH₂)₂-^{∗} | CH₃-^{∗} | 1∼60 | ^{∗}-Si(CH₃)₂-CH₂-^{∗} | (CH₃)₃SiO-^{∗} |
| (I-I-13) | C₂H₅O-^{∗} | ^{∗}-(CH₂)₂-^{∗} | CH₃-^{∗} | 1∼60 | ^{∗}-Si(CH₃)₂-(CH₂)₂-^{∗} | (CH₃)₃SiO-^{∗} |
| (I-I-14) | C₂H₅O-^{∗} | ^{∗}-(CH₂)₂-^{∗} | CH₃-^{∗} | 1∼60 | ^{∗}-Si(CH₃)₂-(CH₂)₃-^{∗} | (CH₃)₃SiO-^{∗} |
| (I-I-15) | C₂H₅O-^{∗} | ^{∗}-(CH₂)₂-^{∗} | CH₃-^{∗} | 1∼60 | ^{∗}-Si(CH₃)₂-(CH₂)₄-^{∗} | (CH₃)₃SiO-^{∗} |
| (I-I-16) | C₂H₅O-^{∗} | ^{∗}-(CH₂)₃-^{∗} | CH₃-^{∗} | 1∼60 | - | (CH₃)₃SiO-^{∗} |
| (I-I-17) | C₂H₅O-^{∗} | ^{∗}-(CH₂)₃-^{∗} | CH₃-^{∗} | 1∼60 | ^{∗}-Si(CH₃)₂-CH₂-^{∗} | (CH₃)₃SiO-^{∗} |
| (I-I-18) | C₂H₅O-^{∗} | ^{∗}-(CH₂)₃-^{∗} | CH₃-^{∗} | 1∼60 | ^{∗}-Si(CH₃)₂-(CH₂)₂-^{∗} | (CH₃)₃SiO-^{∗} |
| (I-I-19) | C₂H₅O-^{∗} | ^{∗}-(CH₂)₃-^{∗} | CH₃-^{∗} | 1∼60 | ^{∗}-Si(CH₃)₂-(CH₂)₃-^{∗} | (CH₃)₃SiO-^{∗} |
| (I-I-20) | C₂H₅O-^{∗} | ^{∗}-(CH₂)₃-^{∗} | CH₃-^{∗} | 1∼60 | ^{∗}-Si(CH₃)₂-(CH₂)₄-^{∗} | (CH₃)₃SiO-^{∗} |
| (I-I-21) | C₂H₅O-^{∗} | ^{∗}-(CH₂)₄-^{∗} | CH₃-^{∗} | 1∼60 | - | (CH₃)₃SiO-^{∗} |
| (I-I-22) | C₂H₅O-^{∗} | ^{∗}-(CH₂)₄-^{∗} | CH₃-^{∗} | 1∼60 | ^{∗}-Si(CH₃)₂-CH₂-^{∗} | (CH₃)₃SiO-^{∗} |
| (I-I-23) | C₂H₅O-^{∗} | ^{∗}-(CH₂)₄-^{∗} | CH₃-^{∗} | 1∼60 | ^{∗}-Si(CH₃)₂-(CH₂)₂-^{∗} | (CH₃)₃SiO-^{∗} |
| (I-I-24) | C₂H₅O-^{∗} | ^{∗}-(CH₂)₄-^{∗} | CH₃-^{∗} | 1∼60 | ^{∗}-Si(CH₃)₂-(CH₂)₃-^{∗} | (CH₃)₃SiO-^{∗} |
| (I-I-25) | C₂H₅O-^{∗} | ^{∗}-(CH₂)₄-^{∗} | CH₃-^{∗} | 1∼60 | ^{∗}-Si(CH₃)₂-(CH₂)₄-^{∗} | (CH₃)₃SiO-^{∗} |

**[Table 4-2]**

| | A^{a20} | Z^{s10} | R^{s20} | n10 | Y^{s10} | R^{s10} |
|---|---|---|---|---|---|---|
| (I-I-26) | CH₃O-^{∗} | ^{∗}-O-^{∗} | CH₃-^{∗} | 1∼60 | - | (CH₃)₃SiO-^{∗} |
| (I-I-27) | CH₃O-^{∗} | ^{∗}-O-^{∗} | CH₃-^{∗} | 1∼60 | ^{∗}-Si(CH₃)₂-CH₂-^{∗} | (CH₃)₃SiO-^{∗} |
| (I-I-28) | CH₃O-^{∗} | ^{∗}-O-^{∗} | CH₃-^{∗} | 1∼60 | ^{∗}-Si(CH₃)₂-(CH₂)₂-^{∗} | (CH₃)₃SiO-^{∗} |
| (I-I-29) | CH₃O-^{∗} | ^{∗}-O-^{∗} | CH₃-^{∗} | 1∼60 | ^{∗}-Si(CH₃)₂-(CH₂)₃-^{∗} | (CH₃)₃SiO-^{∗} |
| (I-I-30) | CH₃O-^{∗} | ^{∗}-O-^{∗} | CH₃-^{∗} | 1∼60 | ^{∗}-Si(CH₃)₂-(CH₂)₄-^{∗} | (CH₃)₃SiO-^{∗} |
| (I-I-31) | CH₃O-^{∗} | ^{∗}-CH₂-^{∗} | CH₃-^{∗} | 1∼60 | - | (CH₃)₃SiO-^{∗} |
| (I-I-32) | CH₃O-^{∗} | ^{∗}-CH₂-^{∗} | CH₃-^{∗} | 1∼60 | ^{∗}-Si(CH₃)₂-CH₂-^{∗} | (CH₃)₃SiO-^{∗} |
| (I-I-33) | CH₃O-^{∗} | ^{∗}-CH₂-^{∗} | CH₃-^{∗} | 1∼60 | ^{∗}-Si(CH₃)₂-(CH₂)₂-^{∗} | (CH₃)₃SiO-^{∗} |
| (I-I-34) | CH₃O-^{∗} | ^{∗}-CH₂-^{∗} | CH₃-^{∗} | 1∼60 | ^{∗}-Si(CH₃)₂-(CH₂)₃-^{∗} | (CH₃)₃SiO-^{∗} |
| (I-I-35) | CH₃O-^{∗} | ^{∗}-CH₂-^{∗} | CH₃-^{∗} | 1∼60 | ^{∗}-Si(CH₃)₂-(CH₂)₄-^{∗} | (CH₃)₃SiO-^{∗} |
| (I-I-36) | CH₃O-^{∗} | ^{∗}-(CH₂)₂-^{∗} | CH₃-^{∗} | 1∼60 | - | (CH₃)₃SiO-^{∗} |
| (I-I-37) | CH₃O-^{∗} | ^{∗}-(CH₂)₂-^{∗} | CH₃-^{∗} | 1∼60 | ^{∗}-Si(CH₃)₂-CH₂-^{∗} | (CH₃)₃SiO-^{∗} |
| (I-I-38) | CH₃O-^{∗} | ^{∗}-(CH₂)₂-^{∗} | CH₃-^{∗} | 1∼60 | ^{∗}-Si(CH₃)₂-(CH₂)₂-^{∗} | (CH₃)₃SiO-^{∗} |
| (I-I-39) | CH₃O-^{∗} | ^{∗}-(CH₂)₂-^{∗} | CH₃-^{∗} | 1∼60 | ^{∗}-Si(CH₃)₂-(CH₂)₃-^{∗} | (CH₃)₃SiO-^{∗} |
| (I-I-40) | CH₃O-^{∗} | ^{∗}-(CH₂)₂-^{∗} | CH₃-^{∗} | 1∼60 | ^{∗}-Si(CH₃)₂-(CH₂)₄-^{∗} | (CH₃)₃SiO-^{∗} |
| (I-I-41) | CH₃O-^{∗} | ^{∗}-(CH₂)₃-^{∗} | CH₃-^{∗} | 1∼60 | - | (CH₃)₃SiO-^{∗} |
| (I-I-42) | CH₃O-^{∗} | ^{∗}-(CH₂)₃-^{∗} | CH₃-^{∗} | 1∼60 | ^{∗}-Si(CH₃)₂-CH₂-^{∗} | (CH₃)₃SiO-^{∗} |
| (I-I-43) | CH₃O-^{∗} | ^{∗}-(CH₂)₃-^{∗} | CH₃-^{∗} | 1∼60 | ^{∗}-Si(CH₃)₂-(CH₂)₂-^{∗} | (CH₃)₃SiO-^{∗} |
| (I-I-44) | CH₃O-^{∗} | ^{∗}-(CH₂)₃-^{∗} | CH₃-^{∗} | 1∼60 | ^{∗}-Si(CH₃)₂-(CH₂)₃-^{∗} | (CH₃)₃SiO-^{∗} |
| (I-I-45) | CH₃O-^{∗} | ^{∗}-(CH₂)₃-^{∗} | CH₃-^{∗} | 1∼60 | ^{∗}-Si(CH₃)₂-(CH₂)₄-^{∗} | (CH₃)₃SiO-^{∗} |
| (I-I-46) | CH₃O-^{∗} | ^{∗}-(CH₂)₄-^{∗} | CH₃-^{∗} | 1∼60 | - | (CH₃)₃SiO-^{∗} |
| (I-I-47) | CH₃O-^{∗} | ^{∗}-(CH₂)₄-^{∗} | CH₃-^{∗} | 1∼60 | ^{∗}-Si(CH₃)₂-CH₂-^{∗} | (CH₃)₃SiO-^{∗} |
| (I-I-48) | CH₃O-^{∗} | ^{∗}-(CH₂)₄-^{∗} | CH₃-^{∗} | 1∼60 | ^{∗}-Si(CH₃)₂-(CH₂)₂-^{∗} | (CH₃)₃SiO-^{∗} |
| (I-I-49) | CH₃O-^{∗} | ^{∗}-(CH₂)₄-^{∗} | CH₃-^{∗} | 1∼60 | ^{∗}-Si(CH₃)₂-(CH₂)₃-^{∗} | (CH₃)₃SiO-^{∗} |
| (I-I-50) | CH₃O-^{∗} | ^{∗}-(CH₂)₄-^{∗} | CH₃-^{∗} | 1∼60 | ^{∗}-Si(CH₃)₂-(CH₂)₄-^{∗} | (CH₃)₃SiO-^{∗} |

**[Table 5-1]**

| | A^{a10} | Z^{s10} | R^{s20} | n10 | Y^{s10} | R^{s10} |
|---|---|---|---|---|---|---|
| (I-I-51) | C₂H₅O-^{∗} | ^{∗}-O-^{∗} | CH₃-^{∗} | 1∼60 | - | CH₃-^{∗} |
| (I-I-52) | C₂H₅O-^{∗} | ^{∗}-O-^{∗} | CH₃-^{∗} | 1∼60 | ^{∗}-Si(CH₃)₂-CH₂-^{∗} | CH₃-^{∗} |
| (I-I-53) | C₂H₅O-^{∗} | ^{∗}-O-^{∗} | CH₃-^{∗} | 1∼60 | ^{∗}-Si(CH₃)₂-(CH₂)₂-^{∗} | CH₃-^{∗} |
| (I-I-54) | C₂H₅O-^{∗} | ^{∗}-O-^{∗} | CH₃-^{∗} | 1∼60 | ^{∗}-Si(CH₃)₂-(CH₂)₃-^{∗} | CH₃-^{∗} |
| (I-I-55) | C₂H₅O-^{∗} | ^{∗}-O-^{∗} | CH₃-^{∗} | 1∼60 | ^{∗}-Si(CH₃)₂-(CH₂)₄-^{∗} | CH₃-^{∗} |
| (I-I-56) | C₂H₅O-^{∗} | ^{∗}-CH₂-^{∗} | CH₃-^{∗} | 1∼60 | - | CH₃-^{∗} |
| (I-I-57) | C₂H₅O-^{∗} | ^{∗}-CH₂-^{∗} | CH₃-^{∗} | 1∼60 | ^{∗}-Si(CH₃)₂-CH₂-^{∗} | CH₃-^{∗} |
| (I-I-58) | C₂H₅O-^{∗} | ^{∗}-CH₂-^{∗} | CH₃-^{∗} | 1∼60 | ^{∗}-Si(CH₃)₂-(CH₂)₂-^{∗} | CH₃-^{∗} |
| (I-I-59) | C₂H₅O-^{∗} | ^{∗}-CH₂-^{∗} | CH₃-^{∗} | 1∼60 | ^{∗}-Si(CH₃)₂-(CH₂)₃-^{∗} | CH₃-^{∗} |
| (I-I-60) | C₂H₅O-^{∗} | ^{∗}-CH₂-^{∗} | CH₃-^{∗} | 1∼60 | ^{∗}-Si(CH₃)₂-(CH₂)₄-^{∗} | CH₃-^{∗} |
| (I-I-61) | C₂H₅O-^{∗} | ^{∗}-(CH₂)₂-^{∗} | CH₃-^{∗} | 1∼60 | - | CH₃-^{∗} |
| (I-I-62) | C₂H₅O-^{∗} | ^{∗}-(CH₂)₂-^{∗} | CH₃-^{∗} | 1∼60 | ^{∗}-Si(CH₃)₂-CH₂-^{∗} | CH₃-^{∗} |
| (I-I-63) | C₂H₅O-^{∗} | ^{∗}-(CH₂)₂-^{∗} | CH₃-^{∗} | 1∼60 | ^{∗}-Si(CH₃)₂-(CH₂)₂-^{∗} | CH₃-^{∗} |
| (I-I-64) | C₂H₅O-^{∗} | ^{∗}-(CH₂)₂-^{∗} | CH₃-^{∗} | 1∼60 | ^{∗}-Si(CH₃)₂-(CH₂)₃-^{∗} | CH₃-^{∗} |
| (I-I-65) | C₂H₅O-^{∗} | ^{∗}-(CH₂)₂-^{∗} | CH₃-^{∗} | 1∼60 | ^{∗}-Si(CH₃)₂-(CH₂)₄-^{∗} | CH₃-^{∗} |
| (I-I-66) | C₂H₅O-^{∗} | ^{∗}-(CH₂)₃-^{∗} | CH₃-^{∗} | 1∼60 | - | CH₃-^{∗} |
| (I-I-67) | C₂H₅O-^{∗} | ^{∗}-(CH₂)₃-^{∗} | CH₃-^{∗} | 1∼60 | ^{∗}-Si(CH₃)₂-CH₂-^{∗} | CH₃-^{∗} |
| (I-I-68) | C₂H₅O-^{∗} | ^{∗}-(CH₂)₃-^{∗} | CH₃-^{∗} | 1∼60 | ^{∗}-Si(CH₃)₂-(CH₂)₂-^{∗} | CH₃-^{∗} |
| (I-I-69) | C₂H₅O-^{∗} | ^{∗}-(CH₂)₃-^{∗} | CH₃-^{∗} | 1∼60 | ^{∗}-Si(CH₃)₂-(CH₂)₃-^{∗} | CH₃-^{∗} |
| (I-I-70) | C₂H₅O-^{∗} | ^{∗}-(CH₂)₃-^{∗} | CH₃-^{∗} | 1∼60 | ^{∗}-Si(CH₃)₂-(CH₂)₄-^{∗} | CH₃-^{∗} |
| (I-I-71) | C₂H₅O-^{∗} | ^{∗}-(CH₂)₄-^{∗} | CH₃-^{∗} | 1∼60 | - | CH₃-^{∗} |
| (I-I-72) | C₂H₅O-^{∗} | ^{∗}-(CH₂)₄-^{∗} | CH₃-^{∗} | 1∼60 | ^{∗}-Si(CH₃)₂-CH₂-^{∗} | CH₃-^{∗} |
| (I-I-73) | C₂H₅O-^{∗} | ^{∗}-(CH₂)₄-^{∗} | CH₃-^{∗} | 1∼60 | ^{∗}-Si(CH₃)₂-(CH₂)₂-^{∗} | CH₃-^{∗} |
| (I-I-74) | C₂H₅O-^{∗} | ^{∗}-(CH₂)₄-^{∗} | CH₃-^{∗} | 1∼60 | ^{∗}-Si(CH₃)₂-(CH₂)₃-^{∗} | CH₃-^{∗} |
| (I-I-75) | C₂H₅O-^{∗} | ^{∗}-(CH₂)₄-^{∗} | CH₃-^{∗} | 1∼60 | ^{∗}-Si(CH₃)₂-(CH₂)₄-^{∗} | CH₃-^{∗} |

**[Table 5-2]**

| | A^{a10} | Z^{s10} | R^{s20} | n10 | Y^{s10} | R^{s10} |
|---|---|---|---|---|---|---|
| (I-I-76) | CH₃O-^{∗} | ^{∗}-O-^{∗} | CH₃-^{∗} | 1∼60 | - | CH₃-^{∗} |
| (1-1-77) | CH₃O-^{∗} | ^{∗}-O-^{∗} | CH₃-^{∗} | 1∼60 | ^{∗}-Si(CH₃)₂-CH₂-^{∗} | CH₃-^{∗} |
| (1-1-78) | CH₃O-^{∗} | ^{∗}-O-^{∗} | CH₃-^{∗} | 1∼60 | ^{∗}-Si(CH₃)₂-(CH₂)₂-^{∗} | CH₃-^{∗} |
| (I-I-79) | CH₃O-^{∗} | ^{∗}-O-^{∗} | CH₃-^{∗} | 1∼60 | ^{∗}-Si(CH₃)₂-(CH₂)₃-^{∗} | CH₃-^{∗} |
| (I-I-80) | CH₃O-^{∗} | ^{∗}-O-^{∗} | CH₃-^{∗} | 1∼60 | ^{∗}-Si(CH₃)₂-(CH₂)₄-^{∗} | CH₃-^{∗} |
| (1-1-81) | CH₃O-^{∗} | ^{∗}-CH₂-^{∗} | CH₃-^{∗} | 1∼60 | - | CH₃-^{∗} |
| (1-1-82) | CH₃O-^{∗} | ^{∗}-CH₂-^{∗} | CH₃-^{∗} | 1∼60 | ^{∗}-Si(CH₃)₂-CH₂-^{∗} | CH₃-^{∗} |
| (I-I-83) | CH₃O-^{∗} | ^{∗}-CH₂-^{∗} | CH₃-^{∗} | 1∼60 | ^{∗}-Si(CH₃)₂-(CH₂)₂-^{∗} | CH₃-^{∗} |
| (I-I-84) | CH₃O-^{∗} | ^{∗}-CH₂-^{∗} | CH₃-^{∗} | 1∼60 | ^{∗}-Si(CH₃)₂-(CH₂)₃-^{∗} | CH₃-^{∗} |
| (1-1-85) | CH₃O-^{∗} | ^{∗}-CH₂-^{∗} | CH₃-^{∗} | 1∼60 | ^{∗}-Si(CH₃)₂-(CH₂)₄-^{∗} | CH₃-^{∗} |
| (1-1-86) | CH₃O-^{∗} | ^{∗}-(CH₂)₂-^{∗} | CH₃-^{∗} | 1∼60 | - | CH₃-^{∗} |
| (I-I-87) | CH₃O-^{∗} | ^{∗}-(CH₂)₂-^{∗} | CH₃-^{∗} | 1∼60 | ^{∗}-Si(CH₃)₂-CH₂-^{∗} | CH₃-^{∗} |
| (1-1-88) | CH₃O-^{∗} | ^{∗}-(CH₂)₂-^{∗} | CH₃-^{∗} | 1∼60 | ^{∗}-Si(CH₃)₂-(CH₂)₂-^{∗} | CH₃-^{∗} |
| (1-1-89) | CH₃O-^{∗} | ^{∗}-(CH₂)₂-^{∗} | CH₃-^{∗} | 1∼60 | ^{∗}-Si(CH₃)₂-(CH₂)₃-^{∗} | CH₃-^{∗} |
| (1-1-90) | CH₃O-^{∗} | ^{∗}-(CH₂)₂-^{∗} | CH₃-^{∗} | 1∼60 | ^{∗}-Si(CH₃)₂-(CH₂)₄-^{∗} | CH₃-^{∗} |
| (1-1-91) | CH₃O-^{∗} | ^{∗}-(CH₂)₃-^{∗} | CH₃-^{∗} | 1∼60 | - | CH₃-^{∗} |
| (1-1-92) | CH₃O-^{∗} | ^{∗}-(CH₂)₃-^{∗} | CH₃-^{∗} | 1∼60 | ^{∗}-Si(CH₃)₂-CH₂-^{∗} | CH₃-^{∗} |
| (1-1-93) | CH₃O-^{∗} | ^{∗}-(CH₂)₃-^{∗} | CH₃-^{∗} | 1∼60 | ^{∗}-Si(CH₃)₂-(CH₂)₂-^{∗} | CH₃-^{∗} |
| (I-I-94) | CH₃O-^{∗} | ^{∗}-(CH₂)₃-^{∗} | CH₃-^{∗} | 1∼60 | ^{∗}-Si(CH₃)₂-(CH₂)₃-^{∗} | CH₃-^{∗} |
| (I-I-95) | CH₃O-^{∗} | ^{∗}-(CH₂)₃-^{∗} | CH₃-^{∗} | 1∼60 | ^{∗}-Si(CH₃)₂-(CH₂)₄-^{∗} | CH₃-^{∗} |
| (I-I-96) | CH₃O-^{∗} | ^{∗}-(CH₂)₄-^{∗} | CH₃-^{∗} | 1∼60 | - | CH₃-^{∗} |
| (I-I-97) | CH₃O-^{∗} | ^{∗}-(CH₂)₄-^{∗} | CH₃-^{∗} | 1~60 | ^{∗}-Si(CH₃)₂-CH₂-^{∗} | CH₃-^{∗} |
| (I-I-98) | CH₃O-^{∗} | ^{∗}-(CH₂)₄-^{∗} | CH₃-^{∗} | 1∼60 | ^{∗}-Si(CH₃)₂-(CH₂)₂-^{∗} | CH₃-^{∗} |
| (I-I-99) | CH₃O-^{∗} | ^{∗}-(CH₂)₄-^{∗} | CH₃-^{∗} | 1∼60 | ^{∗}-Si(CH₃)₂-(CH₂)₃^{∗} | CH₃-^{∗} |
| (1-1-100) | ! CH₃O-^{∗} | ^{∗}-(CH₂)₄-^{∗} | CH₃-^{∗} | 1∼60 | ^{∗}-Si(CH₃)₂-(CH₂)₄-^{∗} | CH₃-^{∗} |

n10 shown in Tables 4-1, 4-2, 5-1 and 5-2 above is preferably an integer of 1 to 30.

Among compounds represented by the above formula (I-I), for example, (1-1-26) above is represented by the following formula (a1-I).

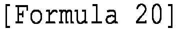

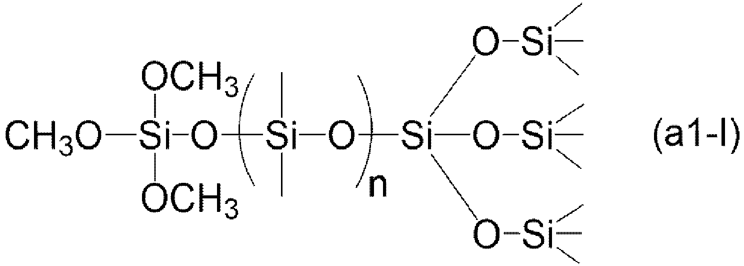

In formula (a1-I), n represents an integer of 1 to 60. n is more preferably an integer of 2 or more, still more preferably an integer of 3 or more, and more preferably an integer of 50 or less, still more preferably an integer of 45 or less, particularly preferably an integer of 30 or less, most preferably an integer of 25 or less.

Examples of the method for synthesizing the compound represented by formula (a1-1) include a method described in Japanese Patent Laid-Open No. 2017-201009.

As the compound represented by the above formula (a1-1) among compounds (A1) represented by formula (a1), "X-24-9011" manufactured by Shin-Etsu Chemical Co., Ltd., or the like can be used. "X-24-9011" manufactured by Shin-Etsu Chemical Co., Ltd. and represented by the following formula is a compound having a trimethoxysilyl group only at one end of one side and no hydroxy group and hydrolyzable group at the other end and containing a siloxane bond in the structure. The compound is represented by formula (a1) where r1 is 3, A^{a1} represents a methoxy group, and R^{a1} is a group of formula (a11-1), and the compound has a weight average molecular weight of 3400.

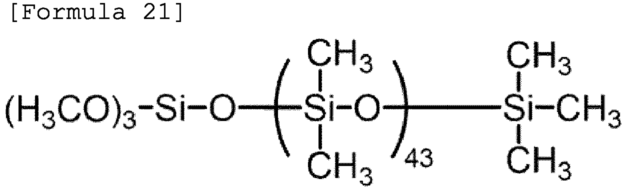

Examples of the compound (A1) represented by formula (a1) also include compounds represented by the following formula (a1-2), i.e. compounds in which R^{a1} in formula (a1) is a group represented by formula (a11-2) and Z^{a1} in formula (a1) is a hydrocarbon group.

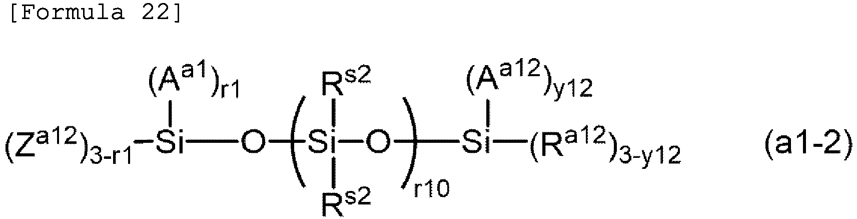

In formula (a1-2), A^{a1}, R^{s2}, A^{a12}, R^{a12}, r1, r10 and y12 have the same meanings as those described above, Z^{a12} represents a hydrocarbon group, a plurality of Z^{a12}s, when present, are optionally different from each other.

In formula (a1-2), A^{a1} and A^{a12} may be the same or different, and are preferably the same.

Examples of the hydrocarbon group represented by Z^{a12} include those similar to the groups described for Z^{a1} above, and the hydrocarbon group is preferably a methyl group or an ethyl group, with a methyl group being more preferable. Z^{a12}and R^{a12} may be the same or different, and are preferably the same.
r1 and y12 are each preferably 1 or 3. r1 and y12 may be the same or different, and are preferably the same.

As the compound represented by formula (a1-2), a compound is preferably used where R^{s2} is a methyl group, r10 represents an integer of 1 to 60, each of A^{a1} and A^{a12} is an alkoxy group having 1 or 2 carbon atoms, or a hydroxy group, each of Z^{a12}and R^{a12} is a methyl group or an ethyl group, and r1 and y12 are the same, and each represent an integer of 1 to 3.

Specific examples of the compound represented by formula (a1-2) include compounds represented by the following formula (I-II). In formula (I-II), combinations of A^{a00}, Z^{a0}, R^{s22}, n20, y0, A^{a0} and R^{a0} are preferably those shown in the table below.

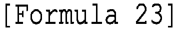

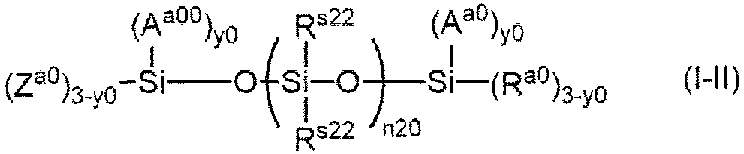

**[Table 6]**

| | A^{aDD} | Z^{aD} | R^{s22} | n20 | y0 | A^{aD} | R^{aD} |
|---|---|---|---|---|---|---|---|
| (I-II-1) | C₂H₅O-* | CH₃-* | CH₃-* | 1∼60 1 | 1 | C₂H₅O-* | CH₃-* |
| (I-II-2) | CH₃O-* | CH₃-* | CH₃-* | 1∼60 | 1 | CH₃O-* | CH₃-* |
| (I-II-3) | HO-* | CH₃-* | CH₃-* | 1∼60 | 1 | HO-* | CH₃-* |
| (I-II-4) | C₂H₅O-* | C₂H₅-* | CH₃-* | 1∼60 | 1 | C₂H₅O-* | C₂H₅-* |
| (I-II-5) | CH₃O-* | C₂H₅-* | CH₃-* | 1∼60 | 1 | CH₃O-* | C₂H₅-* |
| (I-II-6) | HO-* | C₂H₅-* | CH₃-* | 1∼60 | 1 | HO-* | C₂H₅-* |
| (I-II-7) | C₂H₅O-* | CH₃-* | CH₃-* | 1∼60 | 2 | C₂H₅O-* | CH₃-* |
| (I-II-8) | CH₃O-* | CH₃-* | CH₃-* | 1∼60 | 2 | CH₃O-* | CH₃-* |
| (I-11-9) | HO-* | CH₃-* | CH₃-* | 1∼60 | 2 | HO-* | CH₃-* |
| (I-II-10) | C₂H₅O-* | C₂H₅-* | CH₃-* | 1∼60 | 2 | C₂H₅O-* | C₂H₅-* |
| (I-II-11) | CH₃O-* | C₂H₅-* | CH₃-* | 1∼60 | 2 | CH₃O-* | C₂H₅-* |
| (I-II-12) | HO-* | C₂H₅-* | CH₃-* | 1∼60 | 2 | HO-* | C₂H₅-* |
| (I-II-13) | C₂H₅O-* | - | CH₃-* | 1∼60 | 3 | C₂H₅O-* | - |
| (I-II-14) | CH₃O-* | - | CH₃-* | 1∼60 | 3 | CH₃O-* | - |
| (I-II-15) | HO-* | - | CH_{3-*} | 1~60 | 3 | HO-* | - |

n20 shown in Table 6 above is preferably an integer of 1 to 30.

As the compound represented by formula (a1-2), compounds (I-II-1) to (1-11-3) and (1-11-13) to (1-11-15) are preferable, and the compound (1-11-3), the compound (1-11-13) or the compound (1-11-14) is more preferable.

As the compound represented by the above formula (a1-2) among compounds (A1) represented by formula (a1), "DMS-S12" manufactured by Gelest Inc., "KR-410" manufactured by Shin-Etsu Chemical Co., Ltd. or the like can also be used. "DMS-S12" manufactured by Gelest Inc. is a compound in which n20 is 4 to 7 in formula (1-11-3) shown in Table 6 above. "KR-410" manufactured by Shin-Etsu Chemical Co., Ltd. is a compound in which n20 is 10 in formula (I-II-14) shown in Table 6 above.

The compound (A1) represented by formula (a1) is preferably a compound represented by formula (a1-1) or a compound represented by formula (a1-2), more preferably a compound represented by formula (a1-1).

The compounds (A1) may be used alone, or used in combination of two or more thereof.

When the total amount of the mixed composition is 100 mass%, the amount of the compound (A1) is preferably 0.01 to 30 mass%. The amount of the compound (A1) is the total amount of a plurality of compounds (A1) when a plurality of compounds (A1) are used. The amount of the compound (A1) is more preferably 0.05 mass% or more, still more preferably 0.1 mass% or more, and more preferably 25 mass% or less, still more preferably 10 mass% or less.

### [Organosilicon compound (B)]

In the mixed composition of the present invention, an organosilicon compound (B) represented by the following formula (b1) is mixed. By mixing the organosilicon compound (B), the liquid-repellent property is improved. By mixing the organosilicon compound (B), the liquid droplet removing property is also improved.

Si (R^{b1}) _{b20}(X^{b1})_{4-b20} (b1)

In formula (b1), R^{b1} represents a hydrocarbon group having 1 to 5 carbon atoms, X^{b1} represents a hydrolyzable group, and b20 is 0 or 1.

In the above formula (b1), the number of carbon atoms in the hydrocarbon group represented by R^{b1} is preferably 2 or more, and preferably 4 or less, more preferably 3 or less.

In the above formula (b1), the hydrocarbon group represented by R^{b1} is preferably a saturated hydrocarbon group, more preferably a linear or branched alkyl group, still more preferably a linear alkyl group. The alkyl group is particularly preferably a methyl group, an ethyl group or a propyl group.

In the above formula (b1), b20 is preferably 0.

Examples of the hydrolyzable group represented by X^{b1} in the above formula (b1) include groups which give a hydroxy group (silanol group) when hydrolyzed, and alkoxy groups having 1 to 6 carbon atoms, a cyano group, an acetoxy group, a chlorine atom, an isocyanate group and the like are preferable. A plurality of X^{b1}s may be the same or different, and are preferably the same. X^{b1} is preferably an alkoxy group having 1 to 6 (more preferably 1 to 4) carbon atoms, or an isocyanate group, more preferably an alkoxy group having 1 to 6 (more preferably 1 to 4) carbon atoms, and it is still more preferable that all X^{b1}s be alkoxy groups having 1 to 6 (more preferably 1 to 4) carbon atoms.

The organosilicon compound (B) is preferably one in which b20 is 0, and X^{b1} is an alkoxy group having 1 to 6 (more preferably 1 to 4) carbon atoms. Specific examples of the organosilicon compound (B) include tetramethoxysilane, tetraethoxysilane (tetraethyl orthosilicate), tetrapropoxysilane, tetrabutoxysilane, methyltrimethoxysilane, methyltriethoxysilane, methyltripropoxysilane and methyltributoxysilane, and tetramethoxysilane and tetraethoxysilane are preferable. The organosilicon compounds (B) may be used alone, or used in combination of two or more thereof.

When the total amount of the mixed composition is 100 mass%, the amount of the organosilicon compound (B) is preferably 0.01 to 25 mass%. The amount of the organosilicon compound (B) is the total amount of a plurality of organosilicon compounds (B) when a plurality of organosilicon compounds (B) are used. The amount of the organosilicon compound (B) is more preferably 0.05 mass% or more, still more preferably 0.08 mass% or more, and more preferably 20 mass% or less, still more preferably 5 mass% or less.

The molar ratio (B/A1) of the organosilicon compound (B) to the compound (A1) is preferably 0.1 or more and 1000 or less. The molar ratio (B/A1) is more preferably 0.3 or more, still more preferably 0.5 or more, furthermore preferably 0.8 or more, and more preferably 800 or less, still more preferably 250 or less, furthermore preferably 30 or less, furthermore preferably 6 or less, particularly preferably 4 or less. When the molar ratio (B/A1) is in the above-described range, the storage stability of the composition can be improved.

The mass ratio (A1/B) of the compound (A1) to the organosilicon compound (B) is preferably 0.001 or more and 40 or less. The mass ratio (A1/B) is more preferably 0.01 or more, still more preferably 0.03 or more, and more preferably 30 or less, still more preferably 20 or less.

### [Organosilicon compound (C)]

In the mixed composition of the present invention, an organosilicon compound (C) represented by the following formula (c1) is mixed. By mixing the organosilicon compound (C), reaction between the compound (A1) and the organosilicon compound (B) can be accelerated, so that the film formation time can be reduced.

R^{c1}-Si (X^{c1})₃ (c1)

In formula (c1), R^{c1} represents a hydrocarbon group having 6 to 30 carbon atoms, and X^{c1} represents a hydrolyzable group.

In the above formula (c1), the number of carbon atoms in the hydrocarbon group represented by R^{c1} is preferably 7 or more, more preferably 8 or more, still more preferably 10 or more, and preferably 20 or less, more preferably 18 or less, still more preferably 12 or less.

The hydrocarbon group represented by R^{c1} is preferably a saturated hydrocarbon group, more preferably a linear or branched alkyl group, still more preferably a linear alkyl group. As alkyl groups, a hexyl group, a heptyl group, an octyl group, a nonyl group, a decyl group, an undecyl group, a dodecyl group, a tetradecyl group, a hexadecyl group and an octadecyl group are preferable, an octyl group, a decyl group, a dodecyl group, a tetradecyl group, a hexadecyl group and an octadecyl group are more preferable, and an octyl group, a decyl group and a dodecyl group are still more preferable.

Examples of the hydrolyzable group represented by X^{c1} in the above formula (c1) include groups which give a hydroxy group (silanol group) when hydrolyzed, and alkoxy groups having 1 to 6 carbon atoms, a cyano group, an acetoxy group, a chlorine atom, an isocyanate group and the like are preferable. Three X^{c1}s may be the same or different, and are preferably the same. X^{c1} is preferably an alkoxy group having 1 to 6 (more preferably 1 to 4, still more preferably 1 or 2) carbon atoms, or a cyano group, more preferably an alkoxy group having 1 to 6 (more preferably 1 to 4, still more preferably 1 or 2) carbon atoms, and it is still more preferable that all X^{c1}s be alkoxy groups having 1 to 6 (more preferably 1 to 4, still more preferably 1 or 2) carbon atoms.

The organosilicon compound (C) is preferably one in which R^{c1} is a linear alkyl group having 6 to 18 (more preferably 8 to 18, still more preferably 8 to 12) carbon atoms, and all X^{c1}s are the same, and are alkoxy groups having 1 to 6 (more preferably 1 to 4, still more preferably 1 or 2) carbon atoms. Specific examples of the organosilicon compound (C) include hexyltrimethoxysilane, hexyltriethoxysilane, heptyltrimethoxysilane, heptyltriethoxysilane, octyltrimethoxysilane, octyltriethoxysilane, nonyltrimethoxysilane, nonyltriethoxysilane, decyltrimethoxysilane, decyltriethoxysilane, undecyltrimethoxysilane, undecyltriethoxysilane, dodecyltrimethoxysilane, dodecyltriethoxysilane, tridecyltrimethoxysilane, tridecyltriethoxysilane, tetradecyltrimethoxysilane, tetradecyltriethoxysilane, pentadecyltrimethoxysilane, pentadecyltriethoxysilane, hexadecyltrimethoxysilane, hexadecyltriethoxysilane, heptadecyltrimethoxysilane, heptadecyltriethoxysilane, octadecyltrimethoxysilane and octadecyltriethoxysilane. Among them, octyltrimethoxysilane, octyltriethoxysilane, decyltrimethoxysilane, decyltriethoxysilane, dodecyltrimethoxysilane, dodecyltriethoxysilane, tetradecyltrimethoxysilane, tetradecyltriethoxysilane, hexadecyltrimethoxysilane, hexadecyltriethoxysilane, octadecyltrimethoxysilane and octadecyltriethoxysilane are preferable, and octyltrimethoxysilane, octyltriethoxysilane, decyltrimethoxysilane, decyltriethoxysilane, dodecyltrimethoxysilane and dodecyltriethoxysilane are more preferable. The organosilicon compounds (C) may be used alone, or used in combination of two or more thereof.

When the total amount of the mixed composition is 100 mass%, the amount of the organosilicon compound (C) is preferably 0.001 to 3 mass%. The amount of the organosilicon compound (C) is the total amount of a plurality of organosilicon compounds (C) when a plurality of organosilicon compounds (C) are used. The amount of the organosilicon compound (C) is more preferably 0.005 mass% or more, still more preferably 0.01 mass% or more, and more preferably 2 mass% or less, still more preferably 1 mass% or less.

When the total amount of the mixed composition is 100 mass%, the total amount (A1+B+C) of the compound (A1), the organosilicon compound (B) and the organosilicon compound (C) is preferably 0.1 to 30 mass%. The total amount (A1+B+C) is more preferably 0.5 mass% or more, still more preferably 1 mass% or more, and more preferably 15 mass% or less, still more preferably 10 mass% or less, furthermore preferably 5 mass% or less.

The molar ratio (A1/C) of the compound (A1) to the organosilicon compound (C) is preferably 0.001 or more and 5 or less. The molar ratio (A1/C) is more preferably 0.005 or more, still more preferably 0.01 or more, furthermore preferably 0.02 or more, and more preferably 4 or less, still more preferably 3 or less, furthermore preferably 2.5 or less.

The mass ratio (A1/C) of the compound (A1) to the organosilicon compound (C) is preferably 0.01 or more and 35 or less. The mass ratio [A1/C] is more preferably 0.1 or more, still more preferably 0.2 or more, particularly preferably 0.3 or more, and more preferably 30 or less, still more preferably 28 or less.

The molar ratio (B/C) of the organosilicon compound (B) to the organosilicon compound (C) is preferably 0.01 or more and 48 or less. The molar ratio (B/C) is more preferably 0.1 or more, still more preferably 0.3 or more, furthermore preferably 0.5 or more, and more preferably 40 or less, still more preferably 25 or less, furthermore preferably 10 or less.

In the mixed composition, water (D) may be mixed.

When the total amount of the mixed composition is 100 mass%, the amount of the water (D) is preferably less than 20 mass%. The amount of the water (D) is more preferably less than 18 mass%, still more preferably 10 mass% or less, particularly preferably 5 mass% or less. The amount of the water (D) may be, for example, 0.01 mass% or more, and is preferably 0.05 mass% or more, more preferably 0.1 mass% or more, still more preferably 0.2 mass% or more.

The mass ratio (D/A1) of the amount of the water (D) to the compound (A1) is preferably 0.1 or more and 150 or less. The mass ratio (D/A1) is more preferably 0.12 or more, still more preferably 0.13 or more, and more preferably 100 or less, still more preferably 50 or less.

The mass ratio [D/(A1+B+C)] of the amount of the water (D) to the total amount of the compound (A1), the organosilicon compound (B) and the organosilicon compound (C) is preferably 0.01 or more and 3 or less. The mass ratio [D/(A1+B+C)] is more preferably 0.03 or more, still more preferably 0.05 or more, and more preferably 2 or less, still more preferably 1.5 or less.

It is preferable that in the mixed composition of the present invention, at least one of a solvent (E), a catalyst (F) and a weak acid (G) having an acid dissociation constant pKa of 1 or more and 5 or less be mixed in addition to the above-described components.

### [Solvent (E)]

It is preferable that as the solvent (E), an organic solvent be mixed, and among organic solvents, hydrophilic organic solvents such as alcohol-based solvents, ether-based solvents, ketone-based solvents, ester-based solvents and amide-based solvents are more preferable. These solvents may be used alone, or used in combination of two or more thereof. Examples of the alcohol-based solvent include ethanol, 1-propanol, 2-propanol, butanol, ethylene glycol, propylene glycol and diethylene glycol. Examples of the ether-based solvent include dimethoxyethane and dioxane. Examples of the ketone-based solvent include methyl isobutyl ketone. Examples of the ester-based solvent include ethyl acetate and butyl acetate. Examples of the amide-based solvent include dimethylformamide. In particular, the solvent (E) is preferably an alcohol-based solvent, more preferably 2-propanol or ethanol.

The solvent (E) may be adjusted according to the material of a base material on which a film is formed by applying the mixed composition. For example, it is preferable to use a ketone-based solvent when a base material of an organic material is used, and it is preferable to use an alcohol-based solvent when a base material of an inorganic material is used.

When the total amount of the mixed composition is 100 mass%, the amount of the solvent (E) is preferably 60 to 98.5 mass%. The amount of the solvent (E) is the total amount of a plurality of solvents (E) when a plurality of solvents (E) are used. The amount of the solvent (E) is more preferably 65 mass% or more, still more preferably 90 mass% or more, particularly preferably 95 mass% or more, and more preferably 98.3 mass% or less, still more preferably 98 mass% or less.

### [Catalyst (F)]

As the catalyst (F), inorganic acids such as hydrogen chloride (normally used in the form of hydrochloric acid), phosphoric acid and nitric acid; carboxylic acid compounds (organic acids) such as maleic acid, malonic acid, formic acid, benzoic acid, phenylethanoic acid, butanoic acid, 2-methylpropanoic acid, propanoic acid, 2,2-dimethylpropanoic acid and acetic acid; basic compounds such as ammonia and amine; organometallic compounds such as aluminum ethylacetoacetate compounds; and the like can be used. As the catalyst (F), acidic compounds such as inorganic acids and organic acids are preferably used, inorganic acids are more preferable, and hydrogen chloride (hydrochloric acid) is still more preferable. The catalysts (F) may be used alone, or used in combination of two or more thereof.

When the total amount of the mixed composition is 100 mass%, the amount of the catalyst (F) is preferably 0.00001 to 0.015 mass%. The amount of the catalyst (F) is the total amount of a plurality of catalysts (F) when a plurality of catalysts (F) are used. The amount of the catalyst (F) is more preferably 0.00003 mass% or more, still more preferably 0.00005 mass% or more, and more preferably 0.01 mass% or less, still more preferably 0.009 mass% or less.

The mass ratio (F/A1) of the amount of the catalyst (F) to the compound (A1) is preferably 0.000005 or more and 0.03 or less. The mass ratio (F/A1) is more preferably 0.00001 or more, still more preferably 0.00005 or more, and more preferably 0.02 or less, still more preferably 0.01 or less.

The mass ratio [F/(A1+B+C)] of the amount of the catalyst (F) to the total amount of the compound (A1), the organosilicon compound (B) and the organosilicon compound (C) is preferably 0.000005 or more and 0.003 or less. The mass ratio [F/(A1+B+C)] is more preferably 0.00001 or more, still more preferably 0.00005 or more, and more preferably 0.002 or less, still more preferably 0.001 or less.

[Weak acid (G) having pKa of 1 or more and 5 or less] When a catalyst other than a phosphoric acid or carboxylic acid compound is used as the catalyst (F), it is preferable that in the mixed composition of the present invention, the weak acid (G) having a pKa of 1 or more and 5 or less be mixed. This enables suppression of impairment of storage stability due to gelation of the mixed composition. The pKa of the weak acid (G) is preferably 4.3 or less, more preferably 4.0 or less, still more preferably 3.5 or less. The pKa of the weak acid (G) is, for example, 1 or more. When the weak acid (G) has a plurality of pKas, whether or not the range of pKa is satisfied is determined on the basis of the smallest pKa.

The weak acid (G) may be either an inorganic acid or an organic acid, and examples thereof include carboxylic acid compounds and phosphoric acid compounds. The weak acids (G) may be used alone, or used in combination of two or more thereof.

The carboxylic acid compound means a compound having at least one carboxy group, may be either a monovalent carboxylic acid compound or a polyvalent carboxylic acid compound (carboxylic acid compound having two or more carboxy groups), and is preferably a polyvalent carboxylic acid compound. The polyvalent carboxylic acid compound is more preferably oxalic acid with two carboxy groups directly bonded to each other, or a polyvalent carboxylic acid compound in which a carboxy group is bonded to each of both ends of a divalent hydrocarbon group and the main chain (longest linear chain) of the hydrocarbon group has 1 to 15 carbon atoms (more preferably 1 to 5, still more preferably 1 to 4, furthermore preferably 1 to 3, particularly preferably 1 or 2 carbon atoms) (particularly dicarboxylic acid, tricarboxylic acid or tetracarboxylic acid). The divalent hydrocarbon group may be linear or branched, may be an aliphatic hydrocarbon group or an aromatic hydrocarbon group, and may be a saturated hydrocarbon group or an unsaturated hydrocarbon group, and hydroxy groups or carboxy groups may be bonded to carbon atoms other than those at both ends of the hydrocarbon group.

Examples of the carboxylic acid compound include dicarboxylic acids such as oxalic acid (pKa = 1.27), malonic acid (pKa = 2.60), succinic acid (pKa = 3.99), maleic acid (pKa = 1.84), fumaric acid (pKa = 3.02), glutaric acid (pKa = 4.13), adipic acid (pKa = 4.26), pimelic acid (pKa = 4.71), tartaric acid (pKa = 2.98), malic acid (pKa = 3.23), phthalic acid (pKa = 2.89), itaconic acid (pKa = 3.85), muconic acid (pKa = 3.87), 1,4-cyclohexanedicarboxylic acid (pKa = 4.51), 1,4-naphthalenedicarboxylic acid, 2,6-naphthalenedicarboxylic acid (pKa = 3.69), 2,7-naphthalenedicarboxylic acid (pKa = 3.72) and 4,4'-biphenyldicarboxylic acid (pKa = 3.77); tricarboxylic acids such as citric acid (pKa = 2.90), aconitic acid (pKa = 2.8), trimellitic acid (pKa = 2.52), trimesic acid, biphenyl-3,4',5-tricarboxylic acid (pKa = 3.36) and tricarballylic acid (pKa = 3.49); and tetracarboxylic acid such as butanetetracarboxylic acid (pKa = 3.25). The carboxylic acid compound is more preferably oxalic acid, dicarboxylic acid with a carboxy group bonded to each of both ends of a saturated or unsaturated linear hydrocarbon group having 1 to 3 carbon atoms(particularly 1 or 2 carbon atoms), or tricarboxylic acid. Specifically, the carboxylic acid compound is preferably oxalic acid, malonic acid, succinic acid, maleic acid, glutaric acid, tricarballylic acid or the like, more preferably oxalic acid, malonic acid, succinic acid, maleic acid or tricarballylic acid, particularly preferably malonic acid, succinic acid or tricarballylic acid.

The carboxylic acid compound may be a polymer having at least one carboxy group in the molecule. Examples of the polymer include polymers containing a structural unit having a carboxy group on a side chain, and the polymer may contain two or more structural units having a carboxy group on a side chain. Examples of the polymer having at least carboxy group in the molecule include (meth)acrylic polymers having a carboxy group, polyester polymers having a carboxy group, and polyolefin polymers having a carboxy group.

The molecular weight of the carboxylic acid compound is preferably 1000 or less, more preferably 500 or less. The molecular weight is preferably 50 or more, more preferably 80 or more, still more preferably 90 or more.

The carboxylic acid compound is preferably a compound represented by the following formula (g1).

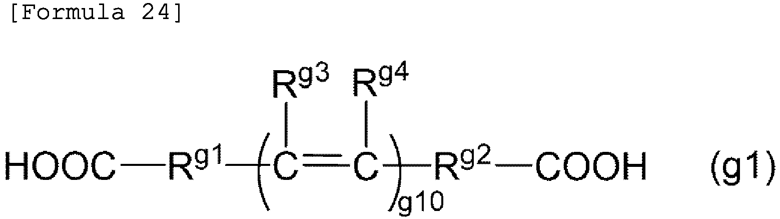

In the above formula (g1), R^{g1} and R^{g2} each independently represent a divalent aliphatic hydrocarbon group having 1 to 10 carbon atoms and optionally having a carboxy group and/or a hydroxy group, a divalent aromatic hydrocarbon group having 6 to 10 carbon atoms and optionally having a carboxy group, or a single bond. R^{g3} and R^{g4} each independently represent an alkyl group having 1 to 10 carbon atoms and optionally having a carboxy group, a carboxy group, or a hydrogen atom. g10 is 0 or 1.

The divalent aliphatic hydrocarbon group having 1 to 10 carbon atoms and represented by R^{g1} and R^{g2} may be linear, branched or cyclic. Specific examples thereof include alkanediyl groups such as a methylene group, an ethylene group, a propylene group and a butylene group.

Examples of the divalent aromatic hydrocarbon group having 6 to 10 carbon atoms and represented by R^{g1} and R^{g2} include a phenylene group.

The divalent aliphatic hydrocarbon groups represented by R^{g1} and R^{g2} optionally have a carboxy group and/or a hydroxy group, and the divalent aromatic hydrocarbon group optionally has a carboxy group.

R^{g1} is preferably a single bond, or a divalent aliphatic hydrocarbon group having 1 to 10 carbon atoms and optionally having a carboxy group, and R^{g1} is more preferably a single bond, or a divalent linear aliphatic hydrocarbon group having 1 to 10 carbon atoms and optionally having a carboxy group. R^{g2} is preferably a single bond.

The alkyl groups having 1 to 10 carbon atoms and represented by R^{g3} and R^{g4} may be linear, branched or cyclic, and specific examples thereof include a methyl group, an ethyl group, a propyl group and a butyl group.

R^{g3} is preferably a hydrogen atom. R^{g4} is preferably a hydrogen atom.

The compound represented by the above formula (g1) is preferably a compound represented by the following formula (g2). In the following formula (g2), g20 is an integer of 0 to 2. 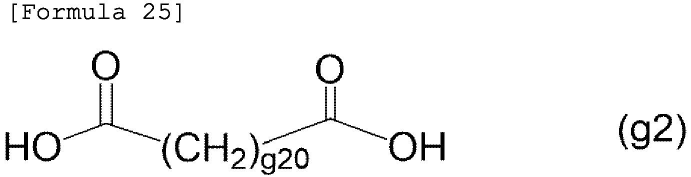 g20 is preferably 1.

The carboxylic acid compounds may be used alone, or used in combination of two or more thereof.

Examples of the phosphoric acid compound include orthophosphoric acid (pKa = 1.83); and polyphosphoric acids such as pyrophosphoric acid (pKa = 1.57), tripolyphosphoric acid (pKa = 0.71), tetrapolyphosphoric acid (pKa = 0.33), trimetaphosphoric acid, tetraphosphorus decaoxide and metaphosphoric acid. Among them, orthophosphoric acid is preferable. The phosphoric acid compounds may be used alone, or used in combination of two or more thereof.

When the total amount of the mixed composition is 100 mass%, the amount of the weak acid (G) is preferably 0.001 to 3 mass%. The amount of the weak acid (G) is the total amount of a plurality of weak acids (G) when a plurality of weak acids (G) are used. The amount of the weak acid (G) is more preferably 0.005 mass% or more, still more preferably 0.01 mass% or more, particularly preferably 0.03 mass% or more, and more preferably 2 mass% or less, still more preferably 1 mass% or less, furthermore preferably 0.5 mass% or less.

The mass ratio (G/A1) of the amount of the weak acid (G) to the compound (A1) is preferably 0.001 or more and 1.5 or less. The mass ratio (G/A1) is more preferably 0.005 or more, still more preferably 0.01 or more, and more preferably 1 or less, still more preferably 0.8 or less.

The mass ratio [G/(A1+B+C)] of the amount of the weak acid (G) to the total amount of the compound (A1), the organosilicon compound (B) and the organosilicon compound (C) is preferably 0.001 or more and 2 or less. The mass ratio [G/(A1+B+C)] is more preferably 0.01 or more, still more preferably 0.015 or more, and more preferably 1 or less, still more preferably 0.5 or less.

In the mixed composition of the present invention, other components such as various additives such as oxidation inhibitors, antirust agents, ultraviolet absorbers, light stabilizers, fungicides, antibacterial agents, biofouling inhibitors, deodorants, pigments, flame retardants and antistatic agents may be mixed in the range not inhibiting the effects of the present invention.

The mixed composition of the present invention can be used as a mixed composition for forming a film excellent in liquid-repellent property (water-repellent property in particular). By using the mixed composition of the present invention, a film excellent in liquid droplet removing property (water droplet removing property in particular) can be formed. The mixed composition of the present invention is also excellent in storage stability, so that it is possible to provide a film excellent in liquid droplet removing property (water droplet removing property in particular) even when the mixed composition stored for a long period of time is used.

The mixed composition of the present invention can be produced by, for example, mixing the above-described components at room temperature.

The method for imparting a liquid-repellent property (and a liquid droplet removing property) to a base material using the mixed composition of the present invention is preferably a method in which a film is formed on a surface of a base material using the mixed composition of the present invention. As the method for forming a film on a surface of a base material using the mixed composition of the present invention, a method can be adopted in which the mixed composition of the present invention is brought into contact with a base material, and left to stand in air in this state.

Examples of the method for bringing the mixed composition of the present invention into contact with a base material include hand-coating (a method in which a cloth or the like is impregnated with the mixed composition and the mixed composition is rubbed against a base material, where, upon rubbing, it is preferable to move the cloth back and forth multiple times on the base material), a spin coating method, a dip coating method, pouring (a method in which the mixed composition is directly dropped to a base material with a dropper or the like to perform coating), spraying (a base material is coated with the mixed composition using a spray), and combinations of these methods.

By leaving the mixed composition of the present invention to stand in air at normal temperature in a state of contact with the base material, the mixed composition can be cured to form a film (hereinafter, sometimes referred to as a cured film) on the base material. The film formed on the substrate is preferably a transparent film.

The standing time is not particularly limited, and is preferably 10 minutes to 24 hours, for example. In the mixed composition of the present invention, the organosilicon compound (C) is mixed, and therefore reaction between the compound (A1) and the organosilicon compound (B) is accelerated, so that it is possible to form a film in a short time. The standing time is preferably 30 minutes or more, and preferably 12 hours or less, more preferably 8 hours or less, still more preferably 5 hours or less, particularly preferably 3 hours or less. It is also preferable to further dry the obtained film by blowing air, for example.

The thickness of the film is preferably 1 nm or more, more preferably 1.5 nm or more, and the upper limit thereof is, for example, 50 nm or less, and may be 20 nm or less. It is preferable that the thickness of the film be above a certain level because exhibition of a good liquid-repellent property (water-repellent property in particular) with stability can be expected. Exhibition of a liquid droplet removing property (water droplet removing property in particular) with stability can be expected.

The present invention also encompasses a layered product comprising a cured film obtained from the mixed composition, and a base material contacting the cured film.

The material of a base material for use in the present invention may be an organic material or an inorganic material.

Examples of the organic material include thermoplastic resins such as acrylic resin, polycarbonate resin, polyester resin, styrene resin, acryl-styrene copolymer resin, cellulose resin and polyolefin resin; and thermosetting resins such as phenol resin, urea resin, melamine resin, epoxy resin, unsaturated polyester, silicone resin and urethane resin.

Examples of the inorganic material include ceramics; glass; metals such as iron, silicon, copper, zinc and aluminum; and alloys including any of the above-described metals. Among them, glass is preferable.

The shape of the base material for use in the present invention is not particularly limited, and may be a planar surface shape or a curved surface shape, or the base material may have a three-dimensional structure in which many surfaces are combined.

The base material for use in the present invention may be subjected to treatment for easy bonding in advance. Examples of the treatment for easy bonding include hydrophilization treatments such as corona treatment, plasma treatment and ultraviolet treatment. Primer treatment may be performed with resin, a silane coupling agent, a tetraalkoxysilane or the like, or a glass film of polysilazane or the like may be applied to a base material in advance.

In the layered product according to the present invention, a base material and a cured film may be stacked with a layer (X) interposed therebetween where the layer (X) is different from the base material and the cured film.

For example, the thickness of the layer (X) is preferably 0.1 nm or more, more preferably 1 nm or more, and preferably 100 µm or less, more preferably 60 µm or less, still more preferably 10 µm or less.

Examples of the layer (X) include a layer (X1) formed from at least one selected from the group (X1) consisting of an active energy ray-curable resin and a thermosetting resin, and a layer (X2) formed from at least one selected from the group (X2) consisting of titanium oxide (TiO₂), zirconium oxide (ZrO₂), aluminum oxide (Al₂O₃), niobium oxide (Nb₂O₅), tantalum oxide (Ta₂O₅), lanthanum oxide (La₂O₃) and silica (SiO₂) .

### [Layer (X1)]

The active energy ray is defined as an energy ray capable of generating an active species by decomposing a compound which generates an active species. Examples of the active energy ray include visible light, ultraviolet rays, infrared rays, X-rays, α-rays, β-rays, γ-rays and electron beams. Examples of the active energy ray-curable resin include ultraviolet ray-curable resins such as acryl-based resins, epoxy-based resins, oxetane-based resins, urethane-based resins, polyamide-based resins, vinylbenzyl chloride-based resins, vinyl-based resins (e.g. polyethylene and vinyl chloride-based resins), styrene-based resins, phenol-based resins, vinyl ether-based resins or silicone-based resins, or mixed resins thereof; and electron beam-curable resins, with ultraviolet ray-curable resins being particularly preferable. As the group (X1), acryl-based resins, epoxy-based resins, polyamide-based resins, vinyl-based resins (vinyl chloride-based resins in particular), styrene-based resins, phenol-based resins and silicone-based resins are particularly preferable.

When the layer (X) is formed from at least one selected from the group (X1), the layer (X) functions as a hard coat layer (hc) having a surface hardness, and is capable of imparting abrasion resistance to the base material. The hardness of the hard coat layer (hc) is a pensile hardness of typically at least B, preferably at least HB, more preferably at least H, furthermore preferably at least 2H.

When the layer (X) includes the hard coat layer (hc), i.e. the layer (X) has a function as a hard coat layer, the structure of the hard coat layer (hc) is not particularly limited, and may be a single-layer structure or a multi-layer structure. The hard coat layer (he) contains preferably an ultraviolet ray-curable resin such as one described above, particularly preferably an acryl-based resin or a silicone-based resin, and for exhibiting a high hardness, it is preferable that the hard coat layer (he) contain an acryl-based resin. It is also preferable that the hard coat layer (hc) contains an epoxy-based resin because adhesion between the base material and the cured film tends to be improved.

When the layer (X) includes the hard coat layer (he), the hard coat layer (hc) may contain additives. Examples of the additive include inorganic microparticles, organic microparticles and mixtures thereof without limitation. Examples of the additive include ultraviolet absorbers; metal oxides such as silica and alumina; and inorganic fillers such as polyorganosiloxane. In particular, when an inorganic filler is contained, adhesion between the base material and the cured film can be improved.

For example, the thickness of the hard coat layer (he) is preferably 1 µm or more, more preferably 2 µm or more, and preferably 100 µm or less. When the thickness of the hard coat layer (hc) is 1 µm or more, sufficient abrasion resistance can be secured, and when the thickness of the hard coat layer (hc) is 100 µm or less, flex resistance can be secured, and as a result, it is possible to suppress occurrence of curling due to cure shrinkage.

### [Layer (X2)]

The layer (X2) is preferably a layer of the group (X2), which is formed from silica (SiO₂).

When the layer (X) is formed from at least one selected from the group (X2), the layer (X) functions as an antireflection layer (ar) which prevents reflection of incident light. When the layer (X) includes the antireflection layer (ar), the antireflection layer (ar) is preferably a layer having a reflection property of having the reflectance reduced to about 5.0% or less in a visible light region of 380 to 780 nm.

The structure of the antireflection layer (ar) is not particularly limited, and may be a single-layer structure or a multi-layer structure. In the case of a multi-layer structure, a structure is preferable in which low-refractive-index layers and high-refractive-index layers are alternately stacked, and the total number of stacked layers is preferably 2 to 20. Examples of the material that forms a low-refractive-index layer include silica (SiO₂), and examples of the material that forms a high-refractive-index layer include metal oxides other than silica, such as titanium oxide, zirconium oxide, aluminum oxide, niobium oxide, tantalum oxide and lanthanum oxide. Specific examples of the antireflection layer having a multi-layer structure include layers having a structure in which the material forming a low-refractive-index layer is SiO₂, the material forming a high-refractive-index layer is ZrO₂, SiO₂ and ZrO₂ are alternately stacked, and the outermost layer on a side opposite to the base material is SiO₂; and layers having a structure in which the material forming a low-refractive-index layer is SiO₂, the material forming a high-refractive-index layer is Nb₂O₅, SiO₂ and Nb₂O₅ are alternately stacked, and the outermost layer on a side opposite to the base material is SiO₂.

The antireflection layer (ar) can be formed by, for example, a deposition method.

For example, the thickness of the antireflection layer (ar) is preferably 0.1 nm or more, and preferably 5 µm or less.

The layer (X) may include both the hard coat layer (he) and the antireflection layer (ar), and in this case, it is preferable that in the layered product according to the present invention, the base material, the hard coat layer (hc), the antireflection layer (ar) and the cured film be stacked in this order from the base material side. When the layer (X) is formed from at least one selected from the group (X1), the layer (X) can be formed by coating the base material with, for example, a mixed composition that forms the layer (X), and curing the mixed composition with heat or an active energy ray such as an ultraviolet ray. When the layer (X) is formed from at least one selected from the group (X2), the layer (X) can be formed on the base material by, for example, a deposition method.

The film obtained using the mixed composition of the present invention is excellent in liquid-repellent property (water-repellent property in particular). The water-repellent property of the film can be evaluated on the basis of the contact angle and the slip drop angle of water with respect to a surface of the film. The contact angle of water with respect to a surface of the film is preferably 100° or more. The contact angle of water with respect to a surface of the film is more preferably 103° or more, still more preferably 105° or more. The upper limit is not particularly limited, and is, for example, 120° or less. The slip drop angle of water with respect to a surface of the film is preferably 20° or less. The slip drop angle of water with respect to a surface of the film is more preferably 18° or less, still more preferably 17° or less, particularly preferably 16° or less. The lower limit is not particularly limited, and is, for example, 2° or more. In the present invention, the film is evaluated as being excellent in water-repellent property when contact angle of water with respect to a surface of the film is 100° or more and the slip drop angle of water with respect to a surface of the film is 20° or less. The method for measuring the contact angle and the slip drop angle of water with respect to a surface of the film will be described in Examples.

The film is also excellent in liquid droplet removing property (water droplet removing property in particular). The water droplet removing property of the film can be evaluated on the basis of the result of a spraying test described below. In the present invention, the film is evaluated as being excellent in water droplet removing property when the average of the numbers of times of spraying, A, in the spraying test is less than 4.0, and the film is evaluated as being particularly excellent in water droplet removing property when the average of the numbers of times of spraying, A, in the spraying test is less than 2.0.

### [Spraying test]

An operation is repeated ten times in which to a surface of a film fixed at an angel of elevation of 85°, 0.6 mL of water is sprayed over a length of 40 cm in a horizontal direction from a position 10 cm off the film under a windless condition at a temperature of 20 ± 15°C and a relative humidity of 65 ± 20%, and the film is left to stand for 1 minute. Whether or not the water droplet moves downward is observed during the standing for 1 minute in each of the operations. When downward movement of the water droplet is observed, it is determined that the water droplet slips and drops, and the number of times of spraying until first slip drop of the water droplet is defined as A.

When the film is curved, for example, an angle formed between a straight line formed by a ground contact surface and a straight line connecting a proximal end portion of the film contacting the ground contact surface and a distal end portion opposed to the proximal end portion may be defined as the angel of elevation.

For spraying water, for example, sprays such as AS ONE SPRAYER "4-5002-01", manual-type sprayer "GS-55 manufactured by TRUSCO Corporation", Spray Gun Head "TSG-500-HD manufactured by TRUSCO Corporation", Canyon Sprayer H-500 "C356-000X-MB manufactured by YAMAZAKI Corporation (CONDOR)", Compact Trigger "7010020001 manufactured by Takemoto Yohki Co., Ltd." and TS-800-2-28-400 Spray "7030030029 manufactured by Takemoto Yohki Co., Ltd." can be used, and in particular, it is preferable to use AS ONE SPRAYER "4-5002-01". When a sprayer other than one that sprays water in an amount of 0.6 mL per spraying, the length over which water is moved in a horizontal direction may be adjusted so that the amount of water placed on a surface of the film is 0.15 mL per 100 cm² of the surface area of the film. Specifically, when the amount of water sprayed is 0.6 mL per spraying, the water is sprayed over a length of 40 cm in the horizontal direction from a position 10 cm off the surface of the film, and when the amount of water sprayed is 0.3 mL per spraying, the water may be sprayed over a length of 20 cm in the horizontal direction from a position 10 cm off the surface of the film. When a spray nozzle is capable of changing the spray shape of water, the water may be sprayed in the form of a fine mist.

By using the mixed composition of the present invention, a film excellent in liquid-repellent property (water-repellent property in particular) can be provided. By using the mixed composition of the present invention, a film also excellent in liquid droplet removing property (water droplet removing property in particular) can be provided.

The film obtained using the mixed composition of the present invention is useful for building materials, automobile parts and plant equipment, for example.

By applying the mixed composition of the present invention to glass to form a film, the liquid-repellent property (water-repellent property in particular) and the liquid droplet removing property (water droplet removing property in particular) of the glass can be improved, and the present invention also includes glass having a film on at least one surface thereof. Specifically, by applying the mixed composition of the present invention to glass for various vehicles and windowpanes of buildings, the liquid-repellent property (water-repellent property in particular) and the liquid droplet removing property (water droplet removing property in particular) can be improved, and a film obtained from the mixed composition of the present invention may be present on at least one surface of the glass. In particular, when a film is formed on a surface of glass for various vehicles using the mixed composition of the present invention, the liquid droplet is unlikely to adhere to a surface of glass, so that the antifouling property can be imparted, resulting in good visibility.

### Examples

Hereinafter, the present invention will be described in detail by way of Examples. The present invention is not limited by Examples below, and can be carried out while changes are appropriately made as long as the spirits described above and later can be met, and all of these changes are encompassed in the technical scope of the present invention.

### (Example 1)

0.076 ml of "X-24-9011" manufactured by Shin-Etsu Chemical Co., Ltd. as the compound (A1), 0.146 ml of tetraethyl orthosilicate (tetraethoxysilane) as the organosilicon compound (B) and 0.024 ml of n-decyltrimethoxysilane as the organosilicon compound (C) were dissolved in 0.479 ml of isopropyl alcohol (2-propanol), and the solution was stirred at room temperature for 10 minutes. To the obtained solution was added dropwise 0.194 ml of 0.01 M hydrochloric acid, and the mixture was stirred at room temperature for 1 hour. To the obtained solution was added dropwise 0.081 ml of a solution of malonic acid diluted by 10 times in terms of mass ratio with isopropyl alcohol, and the mixture was stirred for 2 hours to prepare a sample solution 1. The obtained sample solution 1 (1.000 ml) and 14 ml of isopropyl alcohol were mixed to prepare a coating solution 1.

### (Example 2)

0.147 ml of "X-24-9011" manufactured by Shin-Etsu Chemical Co., Ltd. as the compound (A1), 0.075 ml of tetraethyl orthosilicate as the organosilicon compound (B) and 0.006 ml of n-decyltrimethoxysilane as the organosilicon compound (C) were dissolved in 0.391 ml of isopropyl alcohol, and the solution was stirred at room temperature for 10 minutes. To the obtained solution was added dropwise 0.107 ml of 0.01 M hydrochloric acid, and the mixture was stirred at room temperature for 1 hour. To the obtained solution was added dropwise 0.274 ml of a solution of malonic acid diluted by 10 times in terms of mass ratio with isopropyl alcohol, and the mixture was stirred for 2 hours to prepare a sample solution 2. The obtained sample solution 2 (1.000 ml) and 14 ml of isopropyl alcohol were mixed to prepare a coating solution 2.

### (Example 3)

0.177 ml of "X-24-9011" manufactured by Shin-Etsu Chemical Co., Ltd. as the compound (A1), 0.045 ml of tetraethyl orthosilicate as the organosilicon compound (B) and 0.007 ml of n-decyltrimethoxysilane as the organosilicon compound (C) were dissolved in 0.425 ml of isopropyl alcohol, and the solution was stirred at room temperature for 10 minutes. To the obtained solution was added dropwise 0.070 ml of 0.01 M hydrochloric acid, and the mixture was stirred at room temperature for 1 hour. To the obtained solution was added dropwise 0.276 ml of a solution of malonic acid diluted by 10 times in terms of mass ratio with isopropyl alcohol, and the mixture was stirred for 2 hours to prepare a sample solution 3. The obtained sample solution 3 (1.000 ml) and 14 ml of isopropyl alcohol were mixed to prepare a coating solution 3.

### (Example 4)

0.208 ml of "X-24-9011" manufactured by Shin-Etsu Chemical Co., Ltd. as the compound (A1), 0.013 ml of tetraethyl orthosilicate as the organosilicon compound (B) and 0.009 ml of n-decyltrimethoxysilane as the organosilicon compound (C) were dissolved in 0.462 ml of isopropyl alcohol, and the solution was stirred at room temperature for 10 minutes. To the obtained solution was added dropwise 0.030 ml of 0.01 M hydrochloric acid, and the mixture was stirred at room temperature for 1 hour. To the obtained solution was added dropwise 0.278 ml of a solution of malonic acid diluted by 10 times in terms of mass ratio with isopropyl alcohol, and the mixture was stirred for 2 hours to prepare a sample solution 4. The obtained sample solution 4 (1.000 ml) and 14 ml of isopropyl alcohol were mixed to prepare a coating solution 4.

### (Example 5)

0.046 ml of "X-24-9011" manufactured by Shin-Etsu Chemical Co., Ltd. as the compound (A1), 0.176 ml of tetraethyl orthosilicate as the organosilicon compound (B) and 0.029 ml of n-decyltrimethoxysilane as the organosilicon compound (C) were dissolved in 0.437 ml of isopropyl alcohol, and the solution was stirred at room temperature for 10 minutes. To the obtained solution was added dropwise 0.231 ml of 0.01 M hydrochloric acid, and the mixture was stirred at room temperature for 1 hour. To the obtained solution was added dropwise 0.081 ml of a solution of malonic acid diluted by 10 times in terms of mass ratio with isopropyl alcohol, and the mixture was stirred for 2 hours to prepare a sample solution 5. The obtained sample solution 5 (1.000 ml) and 14 ml of isopropyl alcohol were mixed to prepare a coating solution 5.

### (Example 6)

0.030 ml of "X-24-9011" manufactured by Shin-Etsu Chemical Co., Ltd. as the compound (A1), 0.192 ml of tetraethyl orthosilicate as the organosilicon compound (B) and 0.032 ml of n-decyltrimethoxysilane as the organosilicon compound (C) were dissolved in 0.415 ml of isopropyl alcohol, and the solution was stirred at room temperature for 10 minutes. To the obtained solution was added dropwise 0.251 ml of 0.01 M hydrochloric acid, and the mixture was stirred at room temperature for 1 hour. To the obtained solution was added dropwise 0.080 ml of a solution of malonic acid diluted by 10 times in terms of mass ratio with isopropyl alcohol, and the mixture was stirred for 2 hours to prepare a sample solution 6. The obtained sample solution 6 (1.000 ml) and 14 ml of isopropyl alcohol were mixed to prepare a coating solution 6.

### (Example 7)

0.016 ml of "X-24-9011" manufactured by Shin-Etsu Chemical Co., Ltd. as the compound (A1), 0.206 ml of tetraethyl orthosilicate as the organosilicon compound (B) and 0.034 ml of n-decyltrimethoxysilane as the organosilicon compound (C) were dissolved in 0.396 ml of isopropyl alcohol, and the solution was stirred at room temperature for 10 minutes. To the obtained solution was added dropwise 0.268 ml of 0.01 M hydrochloric acid, and the mixture was stirred at room temperature for 1 hour. To the obtained solution was added dropwise 0.080 ml of a solution of malonic acid diluted by 10 times in terms of mass ratio with isopropyl alcohol, and the mixture was stirred for 2 hours to prepare a sample solution 7. The obtained sample solution 7 (1.000 ml) and 14 ml of isopropyl alcohol were mixed to prepare a coating solution 7.

### (Example 8)

0.207 ml of a compound with n10 being 24 on average in (I-I-26) shown in Table 4-2 above (hereinafter, sometimes referred to as a "compound 1") as the compound (A1), 0.015 ml of tetraethyl orthosilicate as the organosilicon compound (B) and 0.010 ml of n-decyltrimethoxysilane as the organosilicon compound (C) were dissolved in 0.150 ml of isopropyl alcohol, and the solution was stirred at room temperature for 10 minutes. To the obtained solution was added dropwise 0.033 ml of 0.01 M hydrochloric acid, and the mixture was stirred at room temperature for 3 hours. To the obtained solution, 0.251 ml of a solution of malonic acid diluted by 10 times in terms of mass ratio with isopropyl alcohol and 0.334 ml of isopropyl alcohol were added dropwise to prepare a sample solution 8. The obtained sample solution 8 (1.000 ml) and 14 ml of acetone were mixed to prepare a coating solution 8.

### (Example 9)

0.088 ml of "DMS-S12" manufactured by Gelest Inc. as the compound (A1), 0.134 ml of tetraethyl orthosilicate as the organosilicon compound (B) and 0.022 ml of n-decyltrimethoxysilane as the organosilicon compound (C) were dissolved in 0.297 ml of isopropyl alcohol, and the solution was stirred at room temperature for 10 minutes. To the obtained solution was added dropwise 0.192 ml of 0.01 M hydrochloric acid, and the mixture was stirred at room temperature for 1 hour. To the obtained solution was added dropwise 0.268 ml of a solution of malonic acid diluted by 10 times in terms of mass ratio with isopropyl alcohol, and the mixture was stirred for 2 hours to prepare a sample solution 9. The obtained sample solution 9 (1.001 ml) and 14 ml of isopropyl alcohol were mixed to prepare a coating solution 9.

### (Example 10)

0.177 ml of "X-24-9011" manufactured by Shin-Etsu Chemical Co., Ltd. as the compound (A1), 0.045 ml of tetraethyl orthosilicate as the organosilicon compound (B) and 0.006 ml of hexyltrimethoxysilane as the organosilicon compound (C) were dissolved in 0.429 ml of isopropyl alcohol, and the solution was stirred at room temperature for 10 minutes. To the obtained solution was added dropwise 0.068 ml of 0.01 M hydrochloric acid, and the mixture was stirred at room temperature for 1 hour. To the obtained solution was added dropwise 0.276 ml of a solution of malonic acid diluted by 10 times in terms of mass ratio with isopropyl alcohol, and the mixture was stirred for 2 hours to prepare a sample solution 10. The obtained sample solution 10 (1.001 ml) and 14 ml of isopropyl alcohol were mixed to prepare a coating solution 10.

### (Example 11)

0.177 ml of "X-24-9011" manufactured by Shin-Etsu Chemical Co., Ltd. as the compound (A1), 0.045 ml of tetraethyl orthosilicate as the organosilicon compound (B) and 0.007 ml of n-octyltrimethoxysilane as the organosilicon compound (C) were dissolved in 0.428 ml of isopropyl alcohol, and the solution was stirred at room temperature for 10 minutes. To the obtained solution was added dropwise 0.068 ml of 0.01 M hydrochloric acid, and the mixture was stirred at room temperature for 1 hour. To the obtained solution was added dropwise 0.276 ml of a solution of malonic acid diluted by 10 times in terms of mass ratio with isopropyl alcohol, and the mixture was stirred for 2 hours to prepare a sample solution 11. The obtained sample solution 11 (1.001 ml) and 14 ml of isopropyl alcohol were mixed to prepare a coating solution 11.

### (Example 12)

0.177 ml of "X-24-9011" manufactured by Shin-Etsu Chemical Co., Ltd. as the compound (A1), 0.045 ml of tetraethyl orthosilicate as the organosilicon compound (B) and 0.008 ml of dodecyltrimethoxysilane as the organosilicon compound (C) were dissolved in 0.426 ml of isopropyl alcohol, and the solution was stirred at room temperature for 10 minutes. To the obtained solution was added dropwise 0.068 ml of 0.01 M hydrochloric acid, and the mixture was stirred at room temperature for 1 hour. To the obtained solution was added dropwise 0.276 ml of a solution of malonic acid diluted by 10 times in terms of mass ratio with isopropyl alcohol, and the mixture was stirred for 2 hours to prepare a sample solution 12. The obtained sample solution 12 (1.000 ml) and 14 ml of isopropyl alcohol were mixed to prepare a coating solution 12.

### (Example 13)

0.177 ml of "X-24-9011" manufactured by Shin-Etsu Chemical Co., Ltd. as the compound (A1), 0.045 ml of tetraethyl orthosilicate as the organosilicon compound (B) and 0.010 ml of hexadecyltrimethoxysilane as the organosilicon compound (C) were dissolved in 0.425 ml of isopropyl alcohol, and the solution was stirred at room temperature for 10 minutes. To the obtained solution was added dropwise 0.068 ml of 0.01 M hydrochloric acid, and the mixture was stirred at room temperature for 1 hour. To the obtained solution was added dropwise 0.276 ml of a solution of malonic acid diluted by 10 times in terms of mass ratio with isopropyl alcohol, and the mixture was stirred for 2 hours to prepare a sample solution 13. The obtained sample solution 13 (1.001 ml) and 14 ml of isopropyl alcohol were mixed to prepare a coating solution 13.

### (Example 14)

0.177 ml of "X-24-9011" manufactured by Shin-Etsu Chemical Co., Ltd. as the compound (A1), 0.045 ml of tetraethyl orthosilicate as the organosilicon compound (B) and 0.011 ml of octadecyltrimethoxysilane as the organosilicon compound (C) were dissolved in 0.424 ml of isopropyl alcohol, and the solution was stirred at room temperature for 10 minutes. To the obtained solution was added dropwise 0.068 ml of 0.01 M hydrochloric acid, and the mixture was stirred at room temperature for 1 hour. To the obtained solution was added dropwise 0.276 ml of a solution of malonic acid diluted by 10 times in terms of mass ratio with isopropyl alcohol, and the mixture was stirred for 2 hours to prepare a sample solution 14. The obtained sample solution 14 (1.001 ml) and 14 ml of isopropyl alcohol were mixed to prepare a coating solution 14.

### (Example 15)

0.177 ml of "X-24-9011" manufactured by Shin-Etsu Chemical Co., Ltd. as the compound (A1), 0.045 ml of tetraethyl orthosilicate as the organosilicon compound (B) and 0.007 ml of n-decyltrimethoxysilane as the organosilicon compound (C) were dissolved in 0.429 ml of isopropyl alcohol, and the solution was stirred at room temperature for 10 minutes. To the obtained solution was added dropwise 0.068 ml of 0.01 M hydrochloric acid, and the mixture was stirred at room temperature for 1 hour. To the obtained solution was added dropwise 0.274 ml of a solution of oxalic acid diluted by 10 times in terms of mass ratio with isopropyl alcohol, and the mixture was stirred for 2 hours to prepare a sample solution 15. The obtained sample solution 15 (1.000 ml) and 14 ml of isopropyl alcohol were mixed to prepare a coating solution 15.

### (Example 16)

0.177 ml of "X-24-9011" manufactured by Shin-Etsu Chemical Co., Ltd. as the compound (A1), 0.045 ml of tetraethyl orthosilicate as the organosilicon compound (B) and 0.007 ml of n-decyltrimethoxysilane as the organosilicon compound (C) were dissolved in 0.427 ml of isopropyl alcohol, and the solution was stirred at room temperature for 10 minutes. To the obtained solution was added dropwise 0.068 ml of 0.01 M hydrochloric acid, and the mixture was stirred at room temperature for 1 hour. To the obtained solution was added dropwise 0.276 ml of a solution of maleic acid diluted by 10 times in terms of mass ratio with isopropyl alcohol, and the mixture was stirred for 2 hours to prepare a sample solution 16. The obtained sample solution 16 (1.000 ml) and 14 ml of isopropyl alcohol were mixed to prepare a coating solution 16.

### (Example 17)

0.177 ml of "X-24-9011" manufactured by Shin-Etsu Chemical Co., Ltd. as the compound (A1), 0.045 ml of tetraethyl orthosilicate as the organosilicon compound (B) and 0.007 ml of n-decyltrimethoxysilane as the organosilicon compound (C) were dissolved in 0.136 ml of isopropyl alcohol, and the solution was stirred at room temperature for 10 minutes. To the obtained solution was added dropwise 0.068 ml of 0.01 M hydrochloric acid, and the mixture was stirred at room temperature for 1 hour. To the obtained solution was added dropwise 0.567 ml of a solution of succinic acid diluted by 5 times in terms of mass ratio with isopropyl alcohol, and the mixture was stirred for 2 hours to prepare a sample solution 17. The obtained sample solution 17 (1.000 ml) and 14 ml of isopropyl alcohol were mixed to prepare a coating solution 17.

### (Example 18)

0.177 ml of "X-24-9011" manufactured by Shin-Etsu Chemical Co., Ltd. as the compound (A1), 0.045 ml of tetraethyl orthosilicate as the organosilicon compound (B) and 0.007 ml of n-decyltrimethoxysilane as the organosilicon compound (C) were dissolved in 0.425 ml of isopropyl alcohol, and the solution was stirred at room temperature for 10 minutes. To the obtained solution was added dropwise 0.068 ml of 0.01 M hydrochloric acid, and the mixture was stirred at room temperature for 1 hour. To the obtained solution was added dropwise 0.278 ml of a solution of tricarballylic acid diluted by 10 times in terms of mass ratio with isopropyl alcohol, and the mixture was stirred for 2 hours to prepare a sample solution 18. The obtained sample solution 18 (1.000 ml) and 14 ml of isopropyl alcohol were mixed to prepare a coating solution 18.

### (Example 19)

0.177 ml of "X-24-9011" manufactured by Shin-Etsu Chemical Co., Ltd. as the compound (A1), 0.045 ml of tetraethyl orthosilicate as the organosilicon compound (B) and 0.007 ml of n-decyltrimethoxysilane as the organosilicon compound (C) were dissolved in 0.427 ml of isopropyl alcohol, and the solution was stirred at room temperature for 10 minutes. To the obtained solution was added dropwise 0.068 ml of 0.01 M hydrochloric acid, and the mixture was stirred at room temperature for 1 hour. To the obtained solution was added dropwise 0.276 ml of a solution of malonic acid diluted by 10 times in terms of mass ratio with isopropyl alcohol, and the mixture was stirred for 2 hours to prepare a sample solution 19. The obtained sample solution 19 (1.000 ml), 13.250 ml of isopropyl alcohol and 0.750 ml of the water (D) were mixed to prepare a coating solution 19.

### (Example 20)

0.177 ml of "X-24-9011" manufactured by Shin-Etsu Chemical Co., Ltd. as the compound (A1), 0.045 ml of tetraethyl orthosilicate as the organosilicon compound (B) and 0.007 ml of n-decyltrimethoxysilane as the organosilicon compound (C) were dissolved in 0.427 ml of isopropyl alcohol, and the solution was stirred at room temperature for 10 minutes. To the obtained solution was added dropwise 0.068 ml of 0.01 M hydrochloric acid, and the mixture was stirred at room temperature for 1 hour. To the obtained solution was added dropwise 0.276 ml of a solution of malonic acid diluted by 10 times in terms of mass ratio with isopropyl alcohol, and the mixture was stirred for 2 hours to prepare a sample solution 20. The obtained sample solution 20 (1.000 ml), 11.750 ml of isopropyl alcohol and 2.250 ml of the water (D) were mixed to prepare a coating solution 20.

### (Comparative Example 1)

0.076 ml of "X-24-9011" manufactured by Shin-Etsu Chemical Co., Ltd. as the compound (A1) and 0.146 ml of tetraethyl orthosilicate as the organosilicon compound (B) were dissolved in 0.503 ml of isopropyl alcohol, and the solution was stirred at room temperature for 10 minutes. To the obtained solution was added dropwise 0.194 ml of 0.01 M hydrochloric acid, and the mixture was stirred at room temperature for 1 hour. To the obtained solution was added dropwise 0.081 ml of a solution of malonic acid diluted by 10 times in terms of mass ratio with isopropyl alcohol, and the mixture was stirred for 2 hours to prepare a sample solution A. The obtained sample solution A (1.000 ml) and 14 ml of isopropyl alcohol were mixed to prepare a coating solution A.

### (Comparative Example 2)

0.013 ml of "X-24-9011" manufactured by Shin-Etsu Chemical Co., Ltd. as the compound (A1), 0.209 ml of tetraethyl orthosilicate as the organosilicon compound (B) and 0.034 ml of n-decyltrimethoxysilane as the organosilicon compound (C) were dissolved in 0.397 ml of isopropyl alcohol, and the solution was stirred at room temperature for 10 minutes. To the obtained solution was added dropwise 0.267 ml of 0.01 M hydrochloric acid, and the mixture was stirred at room temperature for 1 hour. To the obtained solution was added dropwise 0.080 ml of a solution of malonic acid diluted by 10 times in terms of mass ratio with isopropyl alcohol, and the mixture was stirred for 2 hours to prepare a sample solution B. The obtained sample solution B (1.000 ml) and 14 ml of isopropyl alcohol were mixed to prepare a coating solution B.

Tables 7-1 to 7-3 show the component compositions (mass%) of the coating solutions. The amount of each component is a value when the total amount of the coating solution is 100 mass%. The amount of the water (D) shown in Tables 7-1 to 7-3 is a value including the amount of water in the catalyst (F). In addition, Tables 7-1 to 7-3 show the molar ratios and the mass ratios of components which are calculated on the basis of the amount of each component.

**[Table 7-1]**

| | | | Example 1 | Example 2 | Example 3 | Example 4 | Example 5 | Example 6 | Example 7 |
|---|---|---|---|---|---|---|---|---|---|
| Compound (A1) | X-24-9011 | Mass% | 0.63 | 1.22 | 1.47 | 1.73 | 0.38 | 0.25 | 0.13 |
| Organosilicon compound (B) | Tetraethyl orthosilicate | Mass% | 1.16 | 0.60 | 0.36 | 0.11 | 1.40 | 1.53 | 1.63 |
| Organosilicon compound (C) | n-Decyltrimethoxysilane | Mass% | 0.183 | 0.047 | 0.056 | 0.067 | 0.220 | 0.241 | 0.257 |
| Water (D) | | Mass% | 1.6 | 0.9 | 0.6 | 0.3 | 1.9 | 2.1 | 2.2 |
| Solvent (E) | Isopropyl alcohol | Mass% | 96.4 | 97.0 | 97.3 | 97.6 | 96.0 | 95.8 | 95.7 |
| Catalyst (F) | Hydrogen chloride | Mass% | 0.00059 | 0.00033 | 0.00021 | 0.00009 | 0.00070 | 0.00076 | 0.00081 |
| | Amount in terms of 0.01 M hydrochloric acid | Mass% | 1.62 | 0.90 | 0.58 | 0.25 | 1.92 | 2.08 | 2.23 |
| Weak acid (G) | Malonic acid | Mass% | 0.057 | 0.192 | 0.193 | 0.194 | 0.056 | 0.056 | 0.056 |
| A1+B+C | | Mass% | 1.98 | 1.86 | 1.88 | 1.91 | 2.00 | 2.02 | 2.02 |
| B/A1 | | Molar ratio | 30 | 8 | 4 | 1 | 60 | 100 | 200 |
| B/C | | Molar ratio | 8 | 16 | 8 | 2 | 8 | 8 | 8 |
| A1/C | | Molar ratio | 0.27 | 2.0 | 2.0 | 2.0 | 0.13 | 0.080 | 0.040 |
| A1/B | | Mass ratio | 0.54 | 2.0 | 4.1 | 16.1 | 0.27 | 0.16 | 0.082 |
| A1/C | | Mass ratio | 3.5 | 25.9 | 26.0 | 25.8 | 1.7 | 1.0 | 0.5 |
| A1/(B+C) | | Mass ratio | 0.47 | 1.9 | 3.5 | 9.9 | 0.23 | 0.14 | 0.070 |
| D/A1 | | Mass ratio | 2.56 | 0.74 | 0.39 | 0.15 | 5.05 | 8.35 | 16.71 |
| D/(A1+B+C) | | Mass ratio | 0.82 | 0.48 | 0.31 | 0.13 | 0.96 | 1.0 | 1.1 |
| F/A1 | | Mass ratio | 0.00093 | 0.00027 | 0.00014 | 0.000053 | 0.0018 | 0.0030 | 0.0061 |
| F/(A1+B+C) | | Mass ratio | 0.00030 | 0.00018 | 0.00011 | 0.000048 | 0.00035 | 0.00038 | 0.00040 |
| G/A1 | | Mass ratio | 0.090 | 0.16 | 0.13 | 0.11 | 0.15 | 0.23 | 0.42 |
| G/(A1+B+C) | | Mass ratio | 0.029 | 0.10 | 0.10 | 0.10 | 0.028 | 0.028 | 0.028 |

**[Table 7-2]**

| | | | Example 8 | Example 9 | Example 10 | Example 11 | Example 12 | Example 13 | Example 14 | Example 15 |
|---|---|---|---|---|---|---|---|---|---|---|
| Compound (A1) | X-24-9011 | Mass% | - | - | 1.47 | 1.47 | 1.47 | 1.47 | 1.47 | 1.47 |
| | Compound 1 | Mass% | 1.55 | - | - | - | - | - | - | - |
| | DMS-S12 | Mass% | - | 0.70 | - | - | - | - | - | - |
| Organosilicon compound (B) | Tetraethyl orthosilicate | Mass% | 0.12 | 1.07 | 0.36 | 0.36 | 0.36 | 0.36 | 0.36 | 0.36 |
| Organosilicon compound (C) | Hexyltrimethoxysilane | Mass% | - | - | 0.045 | - | - | - | - | - |
| | n-Octyltrimethoxysilane | Mass% | - | - | - | 0.051 | - | - | - | - |
| | n-Decyltrimethoxysilane | Mass% | 0.074 | 0.168 | - | - | - | - | - | 0.057 |
| | Dodecyltrimethoxysilane | Mass% | - | - | - | - | 0.063 | - | - | - |
| | Hexadecyltrimethoxysilane | Mass% | - | - | - | - | - | 0.075 | - | - |
| | Octadecyltrimethoxysilane | Mass% | - | - | - | - | - | - | 0.081 | - |
| Water (D) | | Mass% | 0.3 | 1.6 | 0.6 | 0.6 | 0.6 | 0.6 | 0.6 | 0.6 |
| Solvent (E) | Isopropyl alcohol | Mass% | 97.8 | 96.2 | 97.4 | 97.4 | 97.3 | 97.3 | 97.3 | 97.3 |
| Catalyst (F) | Hydrogen chloride | Mass% | 0.00010 | 0.00059 | 0.00021 | 0.00021 | 0.00021 | 0.00021 | 0.00021 | 0.00021 |
| | Amount in terms of 0.01 M hydrochloric acid | Mass% | 0.28 | 1.63 | 0.58 | 0.58 | 0.58 | 0.58 | 0.58 | 0.58 |
| Weak acid (G) | Malonic acid | Mass% | 0.176 | 0.187 | 0.193 | 0.193 | 0.193 | 0.193 | 0.193 | - |
| | Oxalic acid | Mass% | - | - | - | - | - | - | - | 0.193 |
| | Maleic acid | Mass% | - | - | - | - | - | - | - | - |
| | Succinic acid | Mass% | - | - | - | - | - | - | - | - |
| | Tricarballylic acid | Mass% | - | - | - | - | - | - | - | - |
| A1+B+C | | Mass% | 1.74 | 1.94 | 1.87 | 1.88 | 1.89 | 1.90 | 1.91 | 1.88 |
| B/A1 | | Molar ratio | 1 | 4 | 4 | 4 | 4 | 4 | 4 | 4 |
| B/C | | Molar ratio | 2 | 8 | 8 | 8 | 8 | 8 | 8 | 8 |
| A1/C | | Molar ratio | 2 | 2 | 2 | 2 | 2 | 2 | 2 | 2 |
| A1/B | | Mass ratio | 13.3 | 0.66 | 4.08 | 4.08 | 4.08 | 4.08 | 4.08 | 4.08 |
| A1/C | | Mass ratio | 21.1 | 4.2 | 33.0 | 29.0 | 23.4 | 19.6 | 18.1 | 25.9 |
| A1/(B+C) | | Mass ratio | 8.1 | 0.6 | 3.6 | 3.6 | 3.5 | 3.4 | 3.3 | 3.5 |
| D/A1 | | Mass ratio | 0.18 | 2.31 | 0.39 | 0.39 | 0.39 | 0.39 | 0.39 | 0.39 |
| D/(A1+B+C) | | Mass ratio | 0.16 | 0.84 | 0.31 | 0.31 | 0.31 | 0.30 | 0.30 | 0.31 |
| F/A1 | | Mass ratio | 0.000066 | 0.00084 | 0.00014 | 0.00014 | 0.00014 | 0.00014 | 0.00014 | 0.00014 |
| F/(A1+B+C) | | Mass ratio | 0.000059 | 0.00031 | 0.00011 | 0.00011 | 0.00011 | 0.00011 | 0.00011 | 0.00011 |
| G/A1 | | Mass ratio | 0.11 | 0.27 | 0.13 | 0.13 | 0.13 | 0.13 | 0.13 | 0.13 |
| G/(A1+B+C) | | Mass ratio | 0.10 | 0.10 | 0.10 | 0.10 | 0.10 | 0.10 | 0.10 | 0.10 |

**[Table 7-3]**

| | | | Example 16 | Example 17 | Example 18 | Example 19 | Example 20 | Comparative Example 1 | Comparative Example 2 |
|---|---|---|---|---|---|---|---|---|---|
| Compound (A1) | X-24-9011 | Mass% | 1.47 | 1.47 | 1.47 | 1.45 | 1.41 | 0.63 | 0.11 |
| | Compound 1 | Mass% | - | - | - | - | - | - | - |
| | DMS-S12 | Mass% | - | - | - | - | - | - | - |
| Organosilicon compound (B) | Tetraethyl orthosilicate | Mass% | 0.36 | 0.36 | 0.36 | 0.36 | 0.35 | 1.16 | 1.66 |
| Organosilicon compound (C) | Hexyltrimethoxysilane | Mass% | - | - | - | - | - | - | - |
| | n-Octyltrimethoxysilane | Mass% | - | - | - | - | - | - | - |
| | Decyltrimethoxysilane | Mass% | 0.057 | 0.057 | 0.057 | 0.056 | 0.054 | - | 0.262 |
| | Dodecyltrimethoxysilane | Mass% | - | - | - | - | - | - | - |
| | Hexadecyltrimethoxysilane | Mass% | - | - | - | - | - | - | - |
| | Octadecyltrimethoxysilane | Mass% | - | - | - | - | - | - | - |
| Water (D) | | Mass% | 0.6 | 0.6 | 0.6 | 6.8 | 18.9 | 1.6 | 2.3 |
| Solvent (E) | Isopropyl alcohol | Mass% | 97.3 | 97.3 | 97.3 | 91.1 | 79.1 | 96.5 | 95.7 |
| Catalyst (F) | Hydrogen chloride | Mass% | 0.00021 | 0.00021 | 0.00021 | 0.00021 | 0.00020 | 0.00060 | 0.00082 |
| | Amount in terms of 0.01 M hydrochloric acid | Mass% | 0.58 | 0.58 | 0.58 | 0.57 | 0.56 | 1.65 | 2.26 |
| Weak acid (G) | Malonic acid | Mass% | - | - | - | 0.190 | 0.185 | 0.057 | 0.056 |
| | Oxalic acid | Mass% | - | - | - | - | - | - | - |
| | Maleic acid | Mass% | 0.193 | - | - | - | - | - | - |
| | Succinic acid | Mass% | - | 0.193 | - | - | - | - | - |
| | Tricarballylic acid | Mass% | - | - | 0.193 | - | - | - | - |
| A1+B+C | | Mass% | 1.88 | 1.88 | 1.88 | 1.86 | 1.81 | 1.79 | 2.03 |
| B/A1 | | Molar ratio | 4 | 4 | 4 | 4 | 4 | 30 | 250 |
| B/C | | Molar ratio | 8 | 8 | 8 | 8 | 8 | - | 8 |
| A1/C | | Molar ratio | 2 | 2 | 2 | 2 | 2 | - | 0.032 |
| A1/B | | Mass ratio | 4.08 | 4.08 | 4.08 | 4.08 | 4.08 | 0.544 | 0.065 |
| A1/C | | Mass ratio | 25.9 | 25.9 | 25.9 | 25.9 | 25.9 | - | 0.4 |
| A1/(B+C) | | Mass ratio | 3.5 | 3.5 | 3.5 | 3.5 | 3.5 | 0.544 | 0.056 |
| D/A1 | | Mass ratio | 0.39 | 0.39 | 0.39 | 4.73 | 13.39 | 2.60 | 20.82 |
| D/(A1+B+C) | | Mass ratio | 0.31 | 0.31 | 0.31 | 3.7 | 10.4 | 0.92 | 1.28 |
| F/A1 | | Mass ratio | 0.00014 | 0.00014 | 0.00014 | 0.00014 | 0.00014 | 0.00095 | 0.0076 |
| F/(A1+B+C) | | Mass ratio | 0.00011 | 0.00011 | 0.00011 | 0.00011 | 0.00011 | 0.00033 | 0.00047 |
| G/A1 | | Mass ratio | 0.13 | 0.13 | 0.13 | 0.13 | 0.13 | 0.090 | 0.52 |
| G/(A1+B+C) | | Mass ratio | 0.10 | 0.10 | 0.10 | 0.10 | 0.10 | 0.032 | 0.03 |

### (Examples 1 to 20 and Comparative 1 and 2)

A glass substrate of 10 cm × 40 cm (soda lime glass, top surface) with a surface activated by atmospheric pressure plasma treatment was used as a base material. The coating solutions 1 to 20 obtained in Examples 1 to 20 or the coating solutions A and B obtained in Comparative Examples 1 and 2 were each applied onto the glass substrate by hand-coating using a nonwoven fabric. The amount of the coating solution applied was 0.5 ml. After the coating, an excess solution was wiped off with a cotton towel, and the applied coating solution was left to stand at normal temperature and normal humidity for 90 minutes to perform curing, thereby forming a cured film on the glass substrate to obtain a layered product in which a base material and a cured film were stacked. For the film on the glass substrate, which had been obtained with a curing time set to 90 minutes, the contact angle and the slip drop angle were measured by the following method. For the film on the glass substrate, which had been obtained with a curing time set to 90 minutes, a spraying test was conducted by the following method, and the water droplet removing property of the film was evaluated.

### (Reference Example 1)

For a glass substrate with a surface activated by atmospheric pressure plasma treatment, the contact angle and the slip drop angle were measured by the following method without forming a cured film. For a glass substrate with a surface activated by atmospheric pressure plasma treatment, a spraying test was conducted by the following method without forming a cured film, and the water droplet removing property of the glass substrate was evaluated.

### (Example 21)

Glass having a thickness of 0.7 mm was used as a base material. SiO₂ and a metal oxide other than SiOz were alternately stacked on the base material by a vacuum deposition method to stack a layer (X) (antireflection layer) in which a surface on a side opposite to the base material was SiO₂. SiO₂ forms a low-refractive-index layer and the metal oxide other than SiOz forms a high-refractive-index layer. The film-formed surface in the layer (X) was subjected to activation treatment using an atmospheric pressure plasma device (FUJI MACHINE MFG. CO., LTD.). Next, onto the antireflection layer subjected to activation treatment, the coating solution 3 obtained in Example 3 was applied by hand-coating using a nonwoven fabric. The amount of the coating solution applied was 0.5 ml. After the coating, an excess solution was wiped off with a cotton towel, and the applied coating solution was left to stand at normal temperature and normal humidity for 90 minutes to perform curing, thereby forming a cured film on the antireflection layer to obtain a layered product in which a base material, an antireflection layer and a cured film were stacked in this order. For the film on the antireflection layer, which had been obtained with a curing time set to 90 minutes, a spraying test was conducted by the following method, and the water droplet removing property of the film was evaluated.

### [Measurement of contact angle]

Using DM 700 manufactured by Kyowa Interface Science Co., Ltd. as a contact angle measuring apparatus, the contact angle of water with respect to a surface of the film was measured by a liquid droplet method. The analysis method in the liquid droplet method was a θ/2 method, and the amount of water droplet was 3.0 µL.

### [Measurement of slip drop angle]

Using DM 700 manufactured by Kyowa Interface Science Co., Ltd. as a contact angle measuring apparatus, the slip drop angle of water with respect to a surface of the film was measured by a slip drop method, and the dynamic water-repellent property of the surface of the film was evaluated. The analysis method in the slip drop method was a tangent method, and the amount of water droplet was 10 µL. The method for setting slope was intermittent sloping, and slip drop detection was performed after slip drop. Determination of movement was based on an angle of advancement, the slip drop determination time was 10000 ms, and the slip drop determination distance was 5 dot. The "dot" means a pixel at a definition at the time of taking a picture with a camera attached to DM 700. 5 dot is 0.13 mm.

On the basis of the results of the measurements of the contact angle and the slip drop angle, the water-repellent property was evaluated in accordance with the following criteria.

### [Evaluation criteria for water-repellent property]

Excellent water-repellent property: The contact angle is 100° or more and the slip drop angle is 20° or less (indicated by ○ in Tables 8-1 to 8-3 below)

Insufficient water-repellent property: The contact angle is 100° or more, but the slip drop angle is more than 20° (indicated by △ in Tables 8-1 to 8-3 below)

Poor water-repellent property: The contact angle is less than 100°, or the contact angle is less than 100° and the slip drop angle is more than 20° (indicated by × in Tables 8-1 to 8-3 below).

### [Spraying test]

An operation was repeated ten times in which to a surface of the film fixed at an angel of elevation of 85°, 0.6 mL of water was sprayed over a length of 40 cm in a horizontal direction (lateral direction) from a position 10 cm off the film under a windless condition at normal temperature (a temperature of 20 ± 15°C) and normal humidity (a relative humidity of 65 ± 20%), and the film was left to stand for 1 minute. Whether or not the water droplet moved downward was observed during the standing for 1 minute in each of the operations. For spraying water, AS ONE SPRAYER "4-5002-01" (capacity: 500 ml) was used as a spray gun. When downward movement of the water droplet is observed, it is determined that the water droplet slips and drops, and the number of times of spraying until first slip drop of the water droplet is defined as A. That is, after spraying of water, the behavior of the water droplet adhering to the film was observed for up to a minute. When the water droplet first dropped or at least moved slowly within a minute, it was determined that "the water droplet slipped and dropped", and the number of times of spraying, A, at this point of time was measured. On the other hand, when the water droplet did not move even though a minute had passed after spraying of water, water was sprayed again in the same manner. When the number of times of spraying, A, was small, the film was evaluated as having a good water droplet removing property because a very small water droplet slipped and dropped from a surface of the film. When the water droplet stopped on the way, it was not determined that "the water droplet slipped and dropped", water was sprayed again in the same manner, and the operation was repeated until drop of the water droplet. The number of tests was 3. In each test, the water droplet first dropped and the number of times of spraying, A, was measured, followed by repeating spraying of water, so that water was sprayed to the film ten times. After the spraying ten times, the water droplet adhering to a surface of the film was removed using an airgun, and the next test was subsequently conducted. That is, by repeating the test three times, the durability of the film was also evaluated.

On the basis of the results of the measurements in the spraying test, the water droplet removing property was evaluated in accordance with the following criteria.

### [Evaluation criteria for water droplet removing property]

The average of the numbers of times of spraying, A, in the three tests is less than 2.0: particularly excellent water droplet removing property (indicated by ⊙ in Tables 8-1 to 8-3 below)

The average of the numbers of times of spraying, A, in the three tests is 2.0 or more and less than 4.0: excellent water droplet removing property (indicated by ○ in Tables 8-1 to 8-3 below)

The average of the numbers of times of spraying, A, in the three tests is 4.0 or more: poor water droplet removing property (indicated by × in Tables 8-1 to 8-3 below)

Tables 8-1 to 8-3 show the results of the measurements of the contact angle, the slip drop angle and the number of times of spraying. The results of the evaluations of the water-repellent property and the water droplet removing property are also shown.

**[Table 8-1]**

| | | | Example 1 | Example 2 | Example 3 | Example 4 | Example 5 | Example 6 | Example 7 |
|---|---|---|---|---|---|---|---|---|---|
| Contact angle | | Degree | 105.1 | 103.8 | 104.4 | 103.9 | 103.9 | 105.2 | 103 |
| Slip drop angle | | Degree | 3.7 | 3.7 | 10.0 | 11.0 | 4.3 | 12.7 | 15.0 |
| Result of evaluation of water-repellent property | | | ○ | ○ | ○ | ○ | ○ | ○ | ○ |
| Spraying test | First | Number of times | 1 | 2 | 2 | 2 | 1 | 1 | 2 |
| | Second | Number of times | 1 | 1 | 1 | 1 | 1 | 1 | 3 |
| | Third | Number of times | 1 | 1 | 1 | 2 | 2 | 2 | 4 |
| | Average | Number of times | 1.0 | 1.3 | 1.3 | 1.7 | 1.3 | 1.3 | 3.0 |
| Result of evaluation of water droplet removing property | | | ⊙ | ⊙ | ⊙ | ⊙ | ⊙ | ⊙ | ○ |

**[Table 8-2]**

| | | | Example 8 | Example 9 | Example 10 | Example 11 | Example 12 | Example 13 | Example 14 | Example 15 |
|---|---|---|---|---|---|---|---|---|---|---|
| Contact angle | | Degree | 104.1 | 100.0 | 105.7 | 104.2 | 105.2 | 104.9 | 104.8 | 103.1 |
| Slip drop angle | | Degree | 8.3 | 15.0 | 9.0 | 9.7 | 7.3 | 11.7 | 11.7 | 14.0 |
| Result of evaluation of water-repellent property | | | ○ | ○ | ○ | ○ | ○ | ○ | ○ | ○ |
| Spraying test | First | Number of times | 2 | 2 | 2 | 2 | 2 | 2 | 2 | 2 |
| | Second | Number of times | 1 | 2 | 1 | 1 | 1 | 1 | 1 | 2 |
| | Third | Number of times | 1 | 3 | 1 | 1 | 1 | 1 | 1 | 2 |
| | Average | Number of times | 1.3 | 2.3 | 1.3 | 1.3 | 1.3 | 1.3 | 1.3 | 2.0 |
| Result of evaluation of water droplet removing property | | | ⊙ | ○ | ⊙ | ⊙ | ⊙ | ⊙ | ⊙ | ○ |

**[Table 8-3]**

| | | | Example 16 | Example 17 | Example 18 | Example 19 | Example 20 | Example 21 | Comparative Example 1 | Comparative Example 2 |
|---|---|---|---|---|---|---|---|---|---|---|
| Contact angle | | Degree | 103.5 | 104.8 | 104.1 | 104.9 | 105.3 | 105.0 | 95.8 | 104.1 |
| Slip drop angle | | Degree | 13.0 | 11.0 | 11.7 | 11.0 | 12.7 | 12.3 | No slip drop | 20.7 |
| Result of evaluation of water-repellent property | | | ○ | ○ | ○ | ○ | ○ | ○ | × | Δ |
| Spraying test | First | Number of times | 2 | 2 | 2 | 2 | 2 | 2 | 2 | 3 |
| | Second | Number of times | 2 | 1 | 1 | 1 | 2 | 1 | 5 | 4 |
| | Third | Number of times | 2 | 1 | 1 | 1 | 2 | 1 | 6 | 5 |
| | Average | Number of times | 2.0 | 1.3 | 1.3 | 1.3 | 2.0 | 1.0 | 4.3 | 4.0 |
| Result of evaluation of water droplet removing property | | | ○ | ⊙ | ⊙ | ⊙ | ○ | ⊙ | × | × |

The following can be revealed from Tables 8-1 to 8-3. As shown in Examples 1 to 20, the films obtained using the coating solutions 1 to 20 which are mixed compositions satisfying the requirements specified in the present invention had a large contact angle of 100° or more and a small slip drop angle of 20° or less, and thus had a good water-repellent property. Since the average of the numbers of times of spraying until slip drop of the water droplet was as small as less than 4.0, the films were shown to be excellent in water droplet removing property where even a very small water droplet slipped and dropped. "X-24-9011" was used as the compound (A1) in Example 4, and the "compound 1" was used as the compound (A1) in Example 8. Both Examples had a good water-repellent property and water droplet removing property. Comparison between Example 3 in which "X-24-9011" was used as the compound (A1) and Example 9 in which "DMS-S12" was used as the compound (A1) shows that both Examples had a good water-repellent property, and Example 3 had a better water droplet removing property. Examples 3 and 10 to 14 are examples in which the type of the organosilicon compound (C) was changed, and all Examples had a good water-repellent property and water droplet removing property. Examples 3 and 15 to 18 are examples in which the type of the weak acid (G) was changed, and comparison among these Examples shows that the water droplet removing property is further improved by using malonic acid, succinic acid or tricarballylic acid. Examples 3, 19 and 20 are examples in which the amount of water contained in the coating solution was changed, and it is shown that the smaller the amount of water, the better the water droplet removing property. Example 21 is an example in which a cured film was formed on an antireflection layer using the coating solution 3 which is a mixed composition satisfying the requirements specified in the present invention. The cured film was shown to be excellent in water droplet removing property even when the cured film was formed on the antireflection layer.

On the other hand, as shown in Comparative Example 1, the film obtained using the coating solution A which is a mixed composition that does not satisfy requirements specified in the present invention had a small contact angle of less than 100°, and was poor in water-repellent property where the water droplet did not slip and drop. The film was also poor in water droplet removing property where the average of the numbers of times of spraying was 4.0 or more. As shown in Comparative Example 2, the film obtained using the coating solution B which is a mixed composition that does not satisfy the requirements specified in the present invention had a large contact angle of 100° or more, but had a large slip drop angle of more than 20°, and was not sufficient in water-repellent property. The film was also poor in water droplet removing property where the average of the numbers of times of spraying, A, was 4.0 or more. In Reference Example 1, the contact angle of the water droplet with respect to the glass substrate was 8.2° and it was not possible to measure the slip drop angle of water with respect to a surface of the glass substrate because a cured film was not formed on the glass substrate. When a spraying test was conducted, the water droplet adhered to a surface of the glass substrate, so that it was not possible to evaluate the water droplet removing property.

Next, as Reference Examples 2 to 4, the storage stability of the above-described coating solutions 2 to 4 was evaluated. For the storage stability, each of the obtained coating solutions 2 to 4 was held at room temperature for 14 days, a film was then formed on a glass substrate by the above-described method, the obtained film on the glass substrate was subjected to a spraying test by the above-described method, and the water droplet removing property of the film was evaluated. Table 9 below shows the results of evaluations of the number of times of spraying and the slip drop property in the spraying test after the holding. Reference Example 2 shows the results of using the coating solution 2, Reference Example 3 shows the results of using the coating solution 3, and Reference Example 4 shows the results of using the coating solution 4.

**[Table 9]**

| | | | Reference Example 2 | Reference Example 3 | Reference Example 4 |
|---|---|---|---|---|---|
| Spraying test | First | Number of times | 3 | 3 | 3 |
| | Second | Number of times | 2 | 1 | 1 |
| | Third | Number of times | 3 | 1 | 1 |
| | Average | Number of times | 2.7 | 1.7 | 1.7 |
| Result of evaluation of water droplet removing property | | | ○ | ⊙ | ⊙ |

As shown in Reference Examples 2 to 4 in Table 9, coating solutions satisfying the requirements specified in the present invention are shown to be excellent in storage stability.

## Claims

1. A mixed composition of
a compound (A1) represented by formula (a1);
an organosilicon compound (B) represented by formula (b1); and
an organosilicon compound (C) represented by formula (c1),
wherein the mass ratio [A1/(B+C)] of the compound (A1) to the total amount of the organosilicon compound (B) and the organosilicon compound (C) is 0.060 or more: 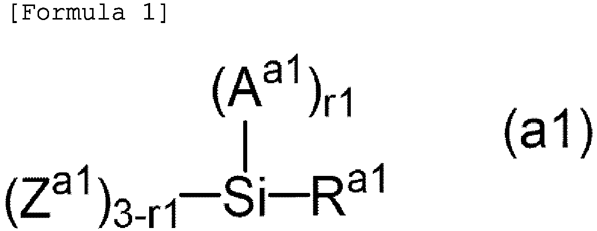
wherein A^{a1} represents a hydroxy group or a hydrolyzable group, and a plurality of A^{a1}s, when present, are optionally different from each other;
Z^{a1} represents a hydrocarbon group, a trialkylsilyl group-containing molecular chain or a siloxane backbone-containing group, and a plurality of Z^{a1}s, when present, are optionally different from each other;
r1 represents an integer of 1 to 3; and
R^{a1} represents a group represented by formula (a11): 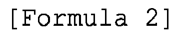 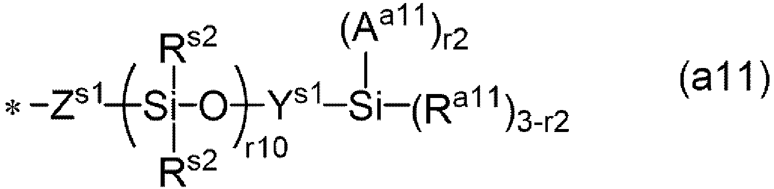
wherein R^{s2}s each independently represent an alkyl group having 1 to 4 carbon atoms;
R^{a11} represents a hydrocarbon group or a trialkylsilyloxy group, hydrogen atoms in the hydrocarbon group or the trialkylsilyloxy group are optionally replaced by fluorine atoms, and a plurality of R^{a11}s, when present, are optionally different from each other;
A^{a11} represents a hydroxy group or a hydrolyzable group, and a plurality of A^{a11}s, when present, are optionally different from each other;
Z^{s1} represents -O- or a divalent hydrocarbon group, and -CH₂- in the divalent hydrocarbon group is optionally replaced by -O-;
Y^{s1} represents a single bond or -Si(R^{s2})₂-L^{s1}-, L^{s1} represents a divalent hydrocarbon group, and -CH₂- in the divalent hydrocarbon group is optionally replaced by -O-;
r2 represents an integer of 0 to 3;
r10 represents an integer of 1 or more; and
* represents a bond,
Si(R^{b1})_{b20}(X^{b1})_{4-b20} (b1)
wherein R^{b1} represents a hydrocarbon group having 1 to 5 carbon atoms;
X^{b1} represents a hydrolyzable group; and
b20 is 0 or 1, and
R^{c1}-Si(X^{c1})₃ (c1)
wherein R^{c1} represents a hydrocarbon group having 6 to 30 carbon atoms; and
X^{c1} represents a hydrolyzable group.

2. The mixed composition according to claim 1, wherein the mass ratio [A1/(B+C)] of the compound (A1) to the total amount of the organosilicon compound (B) and the organosilicon compound (C) is 0.2 or more and 15 or less.

3. The mixed composition according to claim 1 or 2, wherein the mass ratio (A1/C) of the compound (A1) to the organosilicon compound (C) is 0.2 or more and 30 or less.

4. The mixed composition according to any one of claims 1 to 3, wherein water (D) is mixed, and when the total amount of the mixed composition is 100 mass%, the amount of the water (D) is less than 20 mass%.

5. The mixed composition according to any one of claims 1 to 4, wherein a solvent (E) is mixed.

6. The mixed composition according to any one of claims 1 to 5, wherein a weak acid (G) having a pKa of 1 or more and 5 or less is mixed.

7. A film obtained by curing the mixed composition according to any one of claims 1 to 6.

8. A film, wherein when a spraying test for measuring the number of times of spraying, A, of water until slip drop of the water droplet is conducted three times in succession, the average of the numbers of times of spraying, A, is less than 4.0.

9. The film according to claim 8, wherein the contact angle of water with respect to a surface of the film is 100° or more, and the slip drop angle of water with respect to the surface of the film is 20° or less.

10. Glass having the film according to any one of claims 7 to 9 on at least one surface thereof.
